# EUROPEAN PATENT APPLICATION

(11) **EP 4 668 550 A1**
(43) Date of publication of application: **24.12.2025**
(21) Application number: 24890615.8
(22) Date of filing: 11.11.2024
(51) Int. Cl.: H02K 5/20

(54) **DOUBLE-MOTOR POWER ASSEMBLY HAVING INTEGRATED HOUSING, AND ELECTRIC VEHICLE**

(30) Priority: 15.11.2023 CN 202311531542
(71) Applicant: Huawei Digital Power Technologies Co., Ltd., Shenzhen, Guangdong 518043 (CN)
(72) Inventor: WANG, Rongbo, Shenzhen, Guangdong 518043 (CN); WANG, Dong, Shenzhen, Guangdong 518043 (CN); SHI, Chaojie, Shenzhen, Guangdong 518043 (CN); KONG, Weixing, Shenzhen, Guangdong 518043 (CN)
(74) Representative: Gill Jennings & Every LLP
(86) International application number: PCT/CN2024/131258
(87) International publication number: WO 2025/103259

(57) **Abstract**

This application provides a dual-motor powertrain with an integrated housing, and an electric vehicle. The dual-motor powertrain includes two intermediate housings and a middle partition plate, and an accommodation cavity of each intermediate housing is configured to accommodate a reducer and a motor. The middle partition plate includes two partition plate mounting surfaces, the two partition plate mounting surfaces face away from each other, and each partition plate mounting surface is configured to be fastened to one intermediate housing. Each partition plate mounting surface includes two partition plate oil holes, and directions of the partition plate oil holes on the two partition plate mounting surfaces face away from each other. The two partition plate oil holes on each partition plate mounting surface communicate through one internal oil passage of the middle partition plate, and the two partition plate oil holes on each partition plate mounting surface respectively communicate with one heat exchanger and an accommodation cavity through two internal oil passages of one intermediate housing. In this application, two independent oil passages are formed on the middle partition plate, to independently supply oil to accommodation cavities of the two intermediate housings. In this way, an uneven distribution of the coolant oil in the dual-motor powertrain is alleviated, thereby improving operating efficiency of the dual-motor powertrain.

## Description

This application claims priority to Chinese Patent Application No. 202311531542.7, filed with the China National Intellectual Property Administration on November 15, 2023 and entitled "DUAL-MOTOR POWERTRAIN WITH INTEGRATED HOUSING, AND ELECTRIC VEHICLE", which is incorporated herein by reference in its entirety.

### TECHNICAL FIELD

This application relates to the field of electric vehicles, and in particular, to a dual-motor powertrain with an integrated housing, and an electric vehicle.

### BACKGROUND

In recent years, environmental pollution and energy shortage accelerate development and utilization of green renewable energy. Electric vehicles are increasingly popular with users due to advantages such as low pollution, low noise, and high energy efficiency. A market share of the electric vehicles also increases year by year. A powertrain serves as a main power source of the electric vehicle, and operating efficiency of the powertrain is critical to performance of the entire vehicle. When a dual-motor powertrain is in an operating state, an internal component generates a large amount of heat, and abrasion may occur between components in contact. Therefore, coolant oil needs to be supplied to the inside of the dual-motor powertrain to cool and lubricate the internal component. However, currently, the dual-motor powertrain is partially cooled and lubricated insufficiently, and coolant oil of two motors is unevenly distributed, affecting operating efficiency of the powertrain.

### SUMMARY

Embodiments of this application provide a dual-motor powertrain that has an integrated housing and that has good cooling and lubrication effect, and an electric vehicle.

According to a first aspect, an embodiment of this application provides a dual-motor powertrain with an integrated housing. The dual-motor powertrain includes two intermediate housings and a middle partition plate, and an accommodation cavity of each intermediate housing is configured to accommodate one reducer and one motor. The middle partition plate includes two partition plate mounting surfaces, the two partition plate mounting surfaces face away from each other along an axial direction of the dual-motor powertrain, and each partition plate mounting surface is configured to be fastened to one intermediate housing. Each partition plate mounting surface includes two partition plate oil holes, and directions of two partition plate oil holes on one partition plate mounting surface face away from directions of two partition plate oil holes on the other partition plate mounting surface along the axial direction of the dual-motor powertrain. The two partition plate oil holes on each partition plate mounting surface communicate through one internal oil passage of the middle partition plate, and the two partition plate oil holes on each partition plate mounting surface respectively communicate with one heat exchanger and an accommodation cavity through two internal oil passages of one intermediate housing.

In this embodiment of this application, the two partition plate mounting surfaces each are configured to be fastened to one intermediate housing, and each partition plate mounting surface may be a flat surface or a concave-convex surface, provided that the partition plate mounting surface can be fastened to the intermediate housing. Each partition plate mounting surface and a mounting surface of the intermediate housing are both flat surfaces or fit each other in a concave-convex form. The partition plate mounting surface is an end surface that is of the middle partition plate and that fits against the intermediate housing. In an embodiment, the partition plate mounting surface may include a fastening hole and an oil hole, to facilitate fastening and oil supply between the middle partition plate and the intermediate housing.

In this embodiment of this application, a partition plate oil hole on one partition plate mounting surface and a partition plate oil hole on the other partition plate mounting surface face directions away from each other and do not communicate with each other. The two partition plate oil holes on each partition plate mounting surface communicate with each other and are respectively configured to communicate with a heat exchanger and an accommodation cavity. For ease of description, a partition plate oil hole communicating with the heat exchanger is referred to as a partition plate oil inlet hole, a partition plate oil hole communicating with the accommodation cavity is referred to as a partition plate oil outlet hole, and an internal oil passage that is of the middle partition plate and that communicates with the partition plate oil inlet hole and the partition plate oil outlet hole is referred to as an internal communicating oil passage. An opening direction of the partition plate oil inlet hole is parallel to Arrangement direction of a partition plate mounting surface and the intermediate housing, and an opening direction of the partition plate oil outlet hole is the same as the opening direction of the partition plate oil inlet hole.

A partition plate oil inlet hole and a partition plate oil outlet hole that belong to a same partition plate mounting surface respectively supply oil to a reducer and a motor arranged on the same side. Specifically, coolant oil from different heat exchangers enters different internal communicating oil passages of the middle partition plate through each partition plate oil inlet hole, flows out of the partition plate mounting surface through the partition plate oil outlet hole, and flows into an accommodation cavity of an intermediate housing arranged on a same side as the partition plate mounting surface, to cool and lubricate a reducer and a motor in the accommodation cavity. In this embodiment of this application, openings of two partition plate oil inlet holes face away from each other and do not communicate with each other, openings of two partition plate oil outlet holes face away from each other and do not communicate with each other, and oil paths between the middle partition plate and the two intermediate housings are independent of each other, to control flow of coolant oil flowing to different intermediate housings, so that the coolant oil is evenly distributed on two sides of the middle partition plate along the axial direction of the dual-motor powertrain.

If accommodation cavities of the two intermediate housings on the two sides of the middle partition plate share the partition plate oil hole and the internal oil passage, distributions of the coolant oil in the two intermediate housings affect each other. It can be understood that, compared with a dual-motor powertrain in which a middle partition plate includes one oil inlet hole, the dual-motor powertrain in this embodiment of this application has larger internal space. When a vehicle is in a poor operating condition, for example, tilts to a side, the coolant oil is thrown to one side of the dual-motor powertrain due to inertia. In this case, the coolant oil is too concentrated inside an intermediate housing, and consequently, a part of the dual-motor powertrain is supplied with insufficient oil. In addition, when the oil paths between the middle partition plate and the two intermediate housings communicate with each other, even if the vehicle runs smoothly and steadily, it is difficult to ensure that the coolant oil is evenly distributed in different intermediate housings. In this embodiment of this application, the coolant oil separately cools and lubricates reducers and motors in the two intermediate housings through different heat exchangers and independent oil paths. In this way, even if the vehicle is in a poor operating condition, for example, tilts to a side, oil distributions of coolant oil in the two intermediate housings do not interfere with each other. This helps avoid a problem of too little coolant oil in an intermediate housing, alleviate a problem that the dual-motor powertrain is partially cooled and lubricated insufficiently, and improve operating efficiency of the dual-motor powertrain, thereby optimizing overall vehicle performance.

In this embodiment of this application, two motors and two reducers are integrated into the dual-motor powertrain. In this way, integration is high. Partition plate oil holes that are on the two partition plate mounting surfaces and whose opening directions face away from each other divide an oil path between the middle partition plate and the two intermediate housings into two independent oil paths. The coolant oil passes through oil passages of different heat exchangers, the two partition plate oil inlet holes, two internal communicating oil passages, and the two partition plate oil outlet holes, and separately enters the accommodation cavities of the two intermediate housings. In this way, the distributions of the coolant oil in the two intermediate housings do not interfere with each other. This helps alleviate the problem that a part of the dual-motor powertrain is supplied with insufficient oil, improve cooling and lubrication effect of the coolant oil on the reducer and motor, and enhance performance of the dual-motor powertrain and an electric vehicle.

In an embodiment, an outer circumferential surface of the middle partition plate includes two first holes, the two first holes are spaced apart along the axial direction of the dual-motor powertrain, each first hole communicates with two partition plate oil holes on one partition plate mounting surface through one internal oil passage of the middle partition plate, and each first hole is configured to accommodate one blocking member. In this embodiment of this application, the first hole penetrates through two sides, namely, an inner side and an outer side of the middle partition plate along a radial direction of the dual-motor powertrain, and the first hole facilitates processing of the internal communicating oil passage inward from the outer side of the middle partition plate. The first hole communicates with the partition plate oil inlet hole and the partition plate oil outlet hole through the internal communicating oil passage, and the blocking member is located in the first hole, to block the first hole, and prevent coolant oil in the internal communicating oil passage from being leaked from the first hole.

In an embodiment, a spacing between each first hole and one partition plate oil hole communicating with the first hole is less than a spacing between each first hole and the other partition plate oil hole communicating with the first hole. In this embodiment of this application, the partition plate oil holes that are on each partition plate mounting surface and that communicate with the first hole are the partition plate oil inlet hole and the partition plate oil outlet hole. A spacing between the partition plate oil inlet hole and the first hole is less than a spacing between partition plate oil outlet holes. This helps the two partition plate oil holes respectively fit the heat exchanger and the accommodation cavity, and shorten a movement path of the coolant oil from the heat exchanger to the partition plate oil inlet hole and from the partition plate oil outlet hole to the accommodation cavity.

In an embodiment, the outer circumferential surface of the middle partition plate includes two second holes, the two second holes are spaced apart along the axial direction of the dual-motor powertrain, each second hole communicates with the other partition plate oil hole on one partition plate mounting surface through another internal oil passage of the middle partition plate, and each second hole is configured to accommodate one blocking member. In this embodiment of this application, the second hole penetrates through the two sides, namely, the inner side and the outer side of the middle partition plate along the radial direction of the dual-motor powertrain, and the second hole facilitates processing of the another internal oil passage of the middle partition plate inward from the outer side of the middle partition plate. The second hole communicates with the partition plate oil outlet hole on the partition plate mounting surface through the another internal oil passage of the middle partition plate, and the blocking member is located in the second hole, to block the second hole, and prevent coolant oil in the internal oil passage from being leaked from the second hole.

In an embodiment, a spacing between the second hole and the first hole is greater than a spacing between the two partition plate oil holes on each partition plate mounting surface. In this embodiment of this application, both the first hole and the second hole are disposed on the outer circumferential surface of the middle partition plate. If a spacing between two partition plate oil holes that belong to a same partition plate mounting surface is too large, an internal communicating oil passage between the two partition plate oil holes is too long, thereby increasing a loss of coolant oil on a transmission path. In this embodiment of this application, a transmission path of the coolant oil in the middle partition plate can be shortened, and processing difficulty of the internal oil passage can be further reduced.

In an embodiment, a spacing between each second hole and the other partition plate oil hole communicating with the second hole is less than a spacing between the one partition plate oil hole and the other partition plate oil hole communicating with the second hole. In this embodiment of this application, a spacing between the second hole and the partition plate oil outlet hole is small, which is equivalent to that a length of an internal oil passage between the second hole and the partition plate oil outlet hole is small. This helps reduce processing difficulty. In addition, the internal oil passage between the second hole and the partition plate oil outlet hole is not used for flowing of the coolant oil. Therefore, in this embodiment of this application, the internal oil passage is prevented from occupying too large space, thereby improving space utilization.

In an embodiment, the middle partition plate further includes two rotating shaft oil holes, the two rotating shaft oil holes are respectively arranged on same sides as the two partition plate mounting surfaces along the axial direction of the dual-motor powertrain, and each second hole further communicates, through the another internal oil passage of the middle partition plate, with one rotating shaft oil hole distributed on a same side as the other partition plate oil hole; and along a radial direction of the dual-motor powertrain, each rotating shaft oil hole is located on an inner side of the other partition plate oil hole distributed on a same side as the rotating shaft oil hole, and each second hole is located on an outer side of the other partition plate oil hole.

In this embodiment of this application, in the radial direction of the dual-motor powertrain, the partition plate oil outlet hole is located between the second hole and the rotating shaft oil hole, and the second hole, the partition plate oil outlet hole, and the rotating shaft oil hole sequentially communicate. An internal oil passage that is of the middle partition plate and that is used to communicate with the second hole, the partition plate oil outlet hole, and the rotating shaft oil hole is referred to as a radial communicating oil passage, and the internal communicating oil passage communicates with the rotating shaft oil hole through the radial communicating oil passage. A plurality of oil directing structures are integrated into the middle partition plate. In this way, the middle partition plate has a plurality of functions, and the dual-motor powertrain is miniaturized. The rotating shaft oil hole and the partition plate oil outlet hole are configured to direct the coolant oil to different parts of an intermediate housing arranged on the same side. In an embodiment, a rotating shaft oil outlet hole on each partition plate mounting surface is configured to communicate with a motor shaft in a motor distributed on the same side, and the coolant oil flows through the rotating shaft oil hole to the motor shaft in the motor distributed on the same side, to implement cooling and lubrication of the motor.

In this embodiment of this application, the axial direction of the dual-motor powertrain is parallel to an axial direction of the motor. Therefore, an axis of the rotating shaft oil hole is coaxial with an axis of the motor shaft. An opening direction of the rotating shaft oil hole is parallel to Arrangement direction of a partition plate mounting surface and the intermediate housing. This helps the rotating shaft oil hole direct the coolant oil to flow to the motor shaft in the intermediate housing.

In an embodiment, the outer circumferential surface of the middle partition plate includes at least one ventilation valve fastening hole, and each ventilation valve fastening hole is configured to accommodate and fasten one ventilation valve; and a spacing between each ventilation valve fastening hole and the other partition plate oil hole on each partition plate mounting surface is less than a spacing between each ventilation valve fastening hole and the one partition plate oil hole on each partition plate mounting surface. A part of components of the reducer and the motor generates heat during operation, causing thermal expansion of gas in the intermediate housing. If internal gas of the dual-motor powertrain is not adjusted and controlled, high atmospheric pressure caused by expanded gas may cause mechanical damage to the reducer and the motor. In this embodiment of this application, the ventilation valve fastening hole is configured to accommodate the ventilation valve. The partition plate oil outlet hole is closer to the ventilation valve fastening hole than the partition plate oil inlet hole. The ventilation valve can balance internal and external atmospheric pressure of the dual-motor powertrain, to avoid harming safety performance of the dual-motor powertrain by high atmospheric pressure.

In an embodiment, the middle partition plate further includes a communication hole, and the communication hole is configured to communicate with two sides of the middle partition plate and the ventilation valve fastening hole; a spacing between the communication hole and the other partition plate oil hole on each partition plate mounting surface is less than a spacing between the communication hole and the one partition plate oil hole on each partition plate mounting surface; and a spacing between the communication hole and the ventilation valve fastening hole is less than a spacing between the communication hole and the other partition plate oil hole on each partition plate mounting surface.

In this embodiment of this application, the two partition plate mounting surfaces of the middle partition plate each face an accommodation cavity of one intermediate housing along the axial direction of the dual-motor powertrain, and the communication hole penetrates through the two partition plate mounting surfaces of the middle partition plate along the axial direction of the dual-motor powertrain, so that atmospheric pressure of the accommodation cavities of the two intermediate housings is balanced.

In this embodiment of this application, a distance between the communication hole and the ventilation valve fastening hole is less than a distance between the communication hole and the partition plate oil outlet hole. The distance between the communication hole and the ventilation valve fastening hole is compared with the distance between the communication hole and the partition plate oil outlet hole. The distance between the communication hole and the ventilation valve fastening hole is smaller. The internal gas of the dual-motor powertrain moves to an outer side of the dual-motor powertrain through the communication hole and the ventilation valve fastening hole in sequence. This helps shorten a gas transmission path and reduce wind resistance. The distance between the communication hole and the partition plate oil outlet hole is larger. The partition plate oil outlet hole is configured to direct the coolant oil to an inner cavity of the intermediate housing, to help avoid mutual impact between the coolant oil and the internal gas in a moving process, prevent the coolant oil from moving between the two intermediate housings through the communication hole, and ensure that the coolant oil inside the intermediate housings on two sides is evenly distributed.

In this embodiment of this application, the distance between the communication hole and the partition plate oil outlet hole is less than a distance between the communication hole and the partition plate oil inlet hole. The distance between the communication hole and the partition plate oil outlet hole is compared with the distance between the communication hole and the partition plate oil inlet hole. The partition plate oil outlet hole and the partition plate oil inlet hole are separately used to communicate with different parts of the intermediate housing. The distance between the communication hole and the partition plate oil inlet hole is larger, which helps match Arrangement of components in the intermediate housing. In an embodiment, a mounting position of the communication hole may be higher than a mounting position of the partition plate oil inlet hole, so that a height between the two mounting positions is large, to help the coolant oil flow from a lower position to the middle partition plate. In this way, the internal gas flows at a higher position for a balance, to avoid mutual interference between the flowing gas and the coolant oil at the lower position.

In an embodiment, each partition plate mounting surface further includes a plurality of partition plate fastening holes, the partition plate fastening hole is configured to be fastened to one intermediate housing, an opening of each partition plate fastening hole faces the one intermediate housing, the plurality of partition plate fastening holes are sequentially spaced apart on an edge of the middle partition plate, and the two partition plate oil holes are arranged on an inner side of the plurality of partition plate fastening holes along the radial direction of the dual-motor powertrain.

In this embodiment of this application, the two intermediate housings are arranged on the two sides of the middle partition plate along the axial direction of the dual-motor powertrain, and each partition plate mounting surface is fastened, through the partition plate fastening hole, to one intermediate housing distributed on the same side. End surfaces of the plurality of partition plate fastening holes are flush, to implement a close connection between the partition plate fastening holes and the intermediate housing. The plurality of partition plate fastening holes are located at the edge of the middle partition plate, and the partition plate oil inlet hole and the partition plate oil outlet hole are surrounded on the inner side, to help prevent the coolant oil from being leaked to the outer side and improve utilization of the coolant oil. The first hole and the second hole are disposed on the outer circumferential surface of the middle partition plate along the radial direction of the dual-motor powertrain, and both the first hole and the second hole are located on an outer side of the plurality of partition plate fastening holes along the radial direction of the dual-motor powertrain. This helps form the first hole and the second hole, and further helps form an internal communicating oil passage in the first hole and form a radial communicating oil passage in the second hole.

In an embodiment, the middle partition plate further includes two reducer bearing fastening grooves, the two reducer bearing fastening grooves are respectively arranged on same sides as the two partition plate mounting surfaces along the axial direction of the dual-motor powertrain, and each reducer bearing fastening groove is configured to fasten an outer ring of a reducer bearing. Along the radial direction of the dual-motor powertrain, the partition plate oil inlet hole and the partition plate oil outlet hole on each partition plate mounting surface are arranged between the reducer bearing fastening groove and the partition plate fastening hole, and each rotating shaft oil hole, the reducer bearing fastening groove, and the partition plate oil outlet hole that are on the middle partition plate are sequentially spaced apart. Along the radial direction of the dual-motor powertrain, each first hole and each second hole on the middle partition plate are exposed outside the partition plate fastening hole, and a part of the internal communicating oil passage located between the partition plate oil inlet hole and the partition plate oil outlet hole is arranged between the partition plate fastening hole and the reducer bearing fastening groove.

In this embodiment of this application, the middle partition plate fastens the reducer bearing through the reducer bearing fastening groove, and the reducer bearing is configured to bear a load, to reduce friction inside the reducer. On a same partition plate mounting surface, along the radial direction of the dual-motor powertrain, the partition plate oil inlet hole, the partition plate oil outlet hole, and the part of the internal communicating oil passage located between the partition plate oil inlet hole and the partition plate oil outlet hole are all arranged between the partition plate fastening hole and the reducer bearing fastening groove. Arrangement is compact, which helps optimize internal layout of the dual-motor powertrain.

In this embodiment of this application, along the radial direction of the dual-motor powertrain, there is a gap between each rotating shaft oil hole, the reducer bearing fastening groove, and the partition plate oil outlet hole that are on the middle partition plate. A radial gap between the rotating shaft oil hole and the reducer bearing fastening groove can provide space for accommodating the reducer bearing, and a radial gap between the reducer bearing fastening groove and the partition plate oil outlet hole can avoid adverse impact of the reducer bearing on oil directing of the partition plate oil outlet hole. The first hole and the second hole that are on the middle partition plate are exposed on the outer circumferential surface of the middle partition plate, to die-cast the internal communicating oil passage and the radial communicating oil passage, and use the blocking member for blocking. The outer circumferential surface of the middle partition plate is an outer surface that is of the middle partition plate and that is away from the reducer bearing fastening groove along the radial direction of the dual-motor powertrain.

In an embodiment, the middle partition plate includes a rotating shaft protrusion, the rotating shaft protrusion protrudes toward an intermediate housing arranged on the same side, the rotating shaft oil hole penetrates through the rotating shaft protrusion along the axial direction of the dual-motor powertrain, and the rotating shaft protrusion protrudes from a groove bottom of the reducer bearing fastening groove. In an embodiment, an axial length of the rotating shaft protrusion is the same as a groove depth of the reducer bearing fastening groove. In an embodiment, an axial length of the rotating shaft protrusion is greater than a groove depth of the reducer bearing fastening groove, so that the rotating shaft oil hole of the rotating shaft protrusion can penetrate into a reducer accommodation cavity, to convey coolant oil to the motor shaft.

In an embodiment, the middle partition plate includes two partition plate fastening protrusions; along the axial direction of the dual-motor powertrain, the two partition plate mounting surfaces are respectively end surfaces that are of the two partition plate fastening protrusions and that face the two intermediate housings; and protrusion directions of the two partition plate fastening protrusions face away from each other. The ventilation valve fastening hole penetrates through the partition plate fastening protrusions on the two partition plate mounting surfaces, and a projection of the ventilation valve fastening hole partially overlaps a projection of the partition plate fastening protrusion along the axial direction of the dual-motor powertrain.

In this embodiment of this application, the ventilation valve fastening hole penetrates through two sides of the two partition plate fastening protrusions along the radial direction of the dual-motor powertrain, so that the ventilation valve fastening hole communicates with inner cavities of the two intermediate housings through the communication hole. The ventilation valve fastening hole is enclosed by penetrated parts of the two partition plate fastening protrusions, to help improve structural stability of the ventilation valve fastening hole.

In an embodiment, along an axial direction of the ventilation valve fastening hole, an opening at one end of the ventilation valve fastening hole is located in the partition plate fastening protrusion, and an opening at one end of the ventilation valve fastening hole is exposed on the partition plate fastening protrusion. The projection of the ventilation valve fastening hole partially overlaps a projection of the communication hole along the axial direction of the ventilation valve fastening hole.

In this embodiment of this application, in the axial direction of the ventilation valve fastening hole, the opening at one end of the ventilation valve fastening hole extends into an inner side of the partition plate fastening protrusion, the communication hole is located on the inner side of the partition plate fastening protrusion, and the projection of the ventilation valve fastening hole partially overlaps the projection of the communication hole, so that the ventilation valve fastening hole communicates with the communication hole. An opening at the other end of the ventilation valve fastening hole extends out of an outer side of the partition plate fastening protrusion, so that the ventilation valve fastening hole communicates with the outer side of the partition plate fastening protrusion, and the ventilation valve fastening hole is further die-cast from the outer side of the partition plate fastening protrusion, thereby reducing processing difficulty. In an embodiment, the axial direction of the ventilation valve fastening hole intersects with the axial direction of the dual-motor powertrain. In this embodiment of this application, because the ventilation valve fastening hole needs to penetrate through the two partition plate fastening protrusions, the axial direction of the ventilation valve fastening hole intersects with the axial direction of the dual-motor powertrain. In other words, a penetration direction of the ventilation valve fastening hole intersects with the axial direction of the dual-motor powertrain. This can prevent the ventilation valve fastening hole from occupying too large space in the axial direction of the dual-motor powertrain, and help reduce a volume of the dual-motor powertrain.

In an embodiment, the middle partition plate further includes two oil baffle ribs that are integrally die-cast, the communication hole includes two end openings, the two end openings are arranged oppositely along the axial direction of the dual-motor powertrain, and each oil baffle rib is fastened on a circumferential side of one end opening. Along the axial direction of the dual-motor powertrain, each oil baffle rib protrudes from one end opening toward a direction facing away from the other end opening. It can be understood that, when an internal component of the dual-motor powertrain generates heat, not only the internal gas is affected, but also a part of oil liquid evaporates due to heat, to form oil mist. The oil mist moves with expanded gas. If an oil blocking structure is not used, the oil mist is accumulated in the communication hole, and a part of oil liquid is thrown into the communication hole by a component such as a gear in the reducer. Consequently, the ventilation valve is blocked, affecting a balance between internal and external atmospheric pressure of the dual-motor powertrain.

In this embodiment of this application, each oil baffle rib is configured to block oil mist and oil liquid. Specifically, the oil baffle rib and the communication hole are both located on the inner side of the partition plate fastening protrusion along the radial direction of the dual-motor powertrain, and the communication hole is surrounded by the oil baffle rib. In a process in which the coolant oil moves toward the communication hole, the coolant oil needs to first get in contact with the oil baffle rib. The oil baffle rib blocks movement of the oil mist and the oil liquid, to reduce accumulation of the coolant oil in the communication hole. In an embodiment, an area enclosed by the oil baffle rib and the partition plate fastening protrusion surrounds the communication hole, to help block, from different angles, the coolant oil from entering the communication hole.

In an embodiment, each intermediate housing includes a housing mounting surface, the housing mounting surface of each intermediate housing is configured to be fastened to one partition plate mounting surface of the middle partition plate, each housing mounting surface includes two housing oil holes, and the two housing oil holes respectively communicate with a heat exchanger and an accommodation cavity through two internal oil passages of the same intermediate housing; and the two housing oil holes on each housing mounting surface respectively communicate with two partition plate oil holes on the one partition plate mounting surface fastened to the housing mounting surface, and each housing oil hole and one partition plate oil hole communicating with each housing oil hole are arranged along the axial direction of the dual-motor powertrain.

In this embodiment of this application, each housing mounting surface is configured to be fastened to one partition plate mounting surface. Each housing mounting surface is not necessarily a flat surface, provided that the housing mounting surface can be fastened to the middle partition plate. For example, the housing mounting surface may fit the partition plate mounting surface in a concave-convex form. The housing mounting surface is an end surface that is of the intermediate housing and that fits against the middle partition plate. In an embodiment, the housing mounting surface may include a fastening hole and an oil hole, to facilitate fastening and oil supply between the intermediate housing and the middle partition plate.

In this embodiment of this application, the two housing oil holes on each housing mounting surface are respectively configured to communicate with a heat exchanger and an accommodation cavity. For ease of description, a housing oil hole configured to communicate with the heat exchanger is referred to as a housing oil outlet hole, and a housing oil hole configured to communicate with the accommodation cavity is referred to as a housing oil inlet hole. The housing oil outlet hole on each intermediate housing communicates with the partition plate oil inlet hole on one partition plate mounting surface, and the housing oil outlet hole is configured to convey the coolant oil from the heat exchanger to the middle partition plate. The housing oil inlet hole on each intermediate housing communicates with a partition plate oil outlet hole on one partition plate mounting surface, and the housing oil inlet hole is configured to convey the coolant oil from the middle partition plate to the accommodation cavity of the intermediate housing. Arrangement direction of the housing oil hole and the partition plate oil hole is parallel to Arrangement direction of the intermediate housing and the middle partition plate, to help reduce resistance existing when the coolant oil flows between the middle partition plate and the intermediate housing.

In an embodiment, each intermediate housing further includes a housing oil outlet passage, the housing oil outlet passage extends along the axial direction of the dual-motor powertrain, the housing oil outlet passage is configured to communicate with the housing oil outlet hole, and along the axial direction of the dual-motor powertrain, a projection of the housing oil outlet passage of each intermediate housing at least partially overlaps a projection of a partition plate oil inlet hole on a partition plate mounting surface distributed on the same side. In an embodiment, the housing oil outlet passage and the housing oil outlet hole are integrated through die-casting. This helps improve structural stability of the housing oil outlet passage and the housing oil outlet hole.

In an embodiment, each intermediate housing further includes a heat exchanger mounting surface, the heat exchanger mounting surface is configured to fasten the heat exchanger, the heat exchanger mounting surface includes a heat exchanger oil inlet hole, and the heat exchanger oil inlet hole on each intermediate housing is configured to: communicate with an oil outlet of the heat exchanger, and communicate with one housing oil hole through one internal oil passage of the same intermediate housing; and an opening direction of the heat exchanger oil inlet hole on each intermediate housing intersects with the axial direction of the dual-motor powertrain.

In this embodiment of this application, the heat exchanger mounting surface is configured to fasten the heat exchanger, and the heat exchanger oil inlet hole is located on the heat exchanger mounting surface. The heat exchanger oil inlet hole is configured to sequentially direct, to the housing oil outlet hole and the partition plate oil inlet hole, the coolant oil conveyed by the heat exchanger. The heat exchanger is configured to: cool the coolant oil, and then convey the cooled coolant oil to the middle partition plate. In this way, cooling efficiency of the coolant oil on the reducer and the motor is improved. The opening direction of the heat exchanger oil inlet hole on each intermediate housing intersects with the axial direction of the dual-motor powertrain, to prevent a passage between the heat exchanger oil inlet hole and the housing oil outlet hole from occupying too long space in the axial direction of the dual-motor powertrain, and reduce an axial size of the dual-motor powertrain.

In an embodiment, each intermediate housing further includes a heat exchanger oil inlet passage, the heat exchanger oil inlet passage is configured to communicate with the heat exchanger oil inlet hole and the housing oil outlet hole, and an extension direction of the heat exchanger oil inlet passage intersects with the axial direction of the dual-motor powertrain. In this embodiment of this application, the heat exchanger oil inlet hole facilitates processing of the heat exchanger oil inlet passage inward from an outer side of the heat exchanger mounting surface. The heat exchanger oil inlet passage is configured to direct the coolant oil from the heat exchanger to the housing oil outlet hole, so that the coolant oil enters the middle partition plate.

In an embodiment, the heat exchanger mounting surface of each intermediate housing further includes a heat exchanger oil outlet hole, the accommodation cavity of each intermediate housing includes a reducer accommodation cavity and a motor accommodation cavity, an inner wall of each reducer accommodation cavity includes an oil suction hole, each reducer accommodation cavity communicates with the heat exchanger oil outlet hole on the same intermediate housing through the oil suction hole on the inner wall of the reducer accommodation cavity, and each motor accommodation cavity communicates with the other housing oil hole through the other internal oil passage of the same intermediate housing; the motor accommodation cavity, the reducer accommodation cavity, and the housing mounting surface of each intermediate housing are sequentially arranged along the axial direction of the dual-motor powertrain; and along the axial direction of the dual-motor powertrain, the heat exchanger oil outlet hole, the heat exchanger oil inlet hole, and the housing mounting surface of each intermediate housing are sequentially spaced apart, and the heat exchanger oil outlet hole, the oil suction hole, and the housing mounting surface of each intermediate housing are sequentially spaced apart.

In this embodiment of this application, the two reducers of the dual-motor powertrain are respectively located in the reducer accommodation cavities of the two intermediate housings. After the coolant oil cools and lubricates the reducer, the coolant oil needs to be recycled through the oil suction hole, to reduce costs. The oil suction hole is configured to communicate with the reducer accommodation cavity and the heat exchanger oil outlet hole, so that the coolant oil in the reducer accommodation cavity can flow into the heat exchanger through the oil suction hole for cooling. The cooled coolant oil re-enters the accommodation cavity of the intermediate housing through the heat exchanger oil inlet hole, the housing oil outlet hole, and the middle partition plate. In this way, the coolant oil is recycled.

In this embodiment of this application, the middle partition plate directs and distributes the coolant oil. Specifically, after the coolant oil flows into the internal oil passage of the middle partition plate through the partition plate oil inlet hole, a part of the coolant oil flows into the housing oil inlet hole and the motor accommodation cavity of the intermediate housing in sequence through the partition plate oil outlet hole, and the other part of the coolant oil flows into the motor shaft through the rotating shaft oil hole.

In an embodiment, each intermediate housing further includes a housing oil inlet passage and a communicating passage, and the housing oil inlet hole, the housing oil inlet passage, and the communicating passage communicate in sequence along the axial direction of the dual-motor powertrain. The housing oil inlet passage and a part of the communicating passage extend along the axial direction of the dual-motor powertrain, and a projection of the communicating passage partially overlaps a projection of the motor accommodation cavity in the radial direction of the dual-motor powertrain. In this embodiment of this application, the housing oil inlet passage and the communicating passage are configured to direct the coolant oil to the motor accommodation cavity. The housing oil inlet hole facilitates processing of the housing oil inlet passage inward from an outer side of the intermediate housing. In an embodiment, the housing oil inlet hole and the housing oil inlet passage are integrated through die-casting. In this way, the housing oil inlet hole and the housing oil inlet passage do not need to be processed separately, which helps reduce a process and improve structural strength of the housing oil inlet hole and the housing oil inlet passage.

In an embodiment, each intermediate housing further includes an oil suction passage, the oil suction passage is configured to communicate with the oil suction hole and the heat exchanger oil outlet hole, and an extension direction of the oil suction passage intersects with the axial direction of the dual-motor powertrain. The oil suction hole facilitates processing of the oil suction passage inward from the inner wall of the reducer accommodation cavity. In an embodiment, the oil suction hole and the oil suction passage are integrated through die-casting. In this way, the oil suction hole and the oil suction passage do not need to be processed separately, which helps reduce a process and improve structural strength of the oil suction hole and the oil suction passage.

In an embodiment, each intermediate housing includes an oil pump accommodation groove, the oil pump accommodation groove is configured to accommodate an oil pump, and the oil pump accommodation groove of each intermediate housing is configured to communicate with the heat exchanger oil outlet hole and the oil suction hole on the same intermediate housing; and along the axial direction of the dual-motor powertrain, a groove opening direction of the oil pump accommodation groove of each intermediate housing faces away from the oil suction hole communicating with the oil pump accommodation groove.

In this embodiment of this application, the oil pump accommodation groove communicates with the heat exchanger oil outlet hole and the oil suction hole. The oil pump in the oil pump accommodation groove is configured to bump the coolant oil from the reducer accommodation cavity to the heat exchanger, to cool the coolant oil. The cooled coolant oil returns to the accommodation cavity of the intermediate housing. In the axial direction of the dual-motor powertrain, the oil suction hole is located at a groove bottom of the oil pump accommodation groove, and is spaced apart from the groove opening of the oil pump accommodation groove, which helps prevent the coolant oil from being leaked out of the oil pump accommodation groove.

In an embodiment, the oil pump accommodation groove, the oil suction hole, and the reducer accommodation cavity of each intermediate housing, and the middle partition plate are sequentially arranged along the axial direction of the dual-motor powertrain. A projection of the heat exchanger oil outlet hole is located in a projection of the oil pump accommodation groove along the radial direction of the dual-motor powertrain. The opening direction of the heat exchanger oil outlet hole is the same as the opening direction of the heat exchanger oil inlet hole.

In this embodiment of this application, the oil pump accommodation groove, the oil suction hole, and the reducer accommodation cavity of each intermediate housing, and the middle partition plate are sequentially arranged in the axial direction of the dual-motor powertrain. Arrangement is compact and regular, which helps reduce flowing resistance of the coolant oil. In the radial direction of the dual-motor powertrain, the projection of the oil pump accommodation groove covers the projection of the heat exchanger oil outlet hole, which helps shorten a transmission path of the coolant oil between the oil pump accommodation groove and the heat exchanger oil outlet hole and reduce a loss of the coolant oil. The opening direction of the heat exchanger oil outlet hole is parallel to the opening direction of the heat exchanger oil inlet hole, which helps reduce processing difficulty.

In this embodiment of this application, the two intermediate housings each include one oil suction hole, and the two oil suction holes are arranged on the two sides of the middle partition plate along the axial direction of the dual-motor powertrain. If the dual-motor powertrain includes only one oil suction hole, and the oil suction hole is located on one side of the middle partition plate, when the vehicle is tilted to a side or runs in a loop for a long period of time, only coolant oil on one side of the middle partition plate can be recycled, and consequently, a part of the dual-motor powertrain is supplied with insufficient coolant oil. In this embodiment of this application, oil paths in which the two oil suction holes are located do not affect each other. Even if the vehicle is in a poor operating condition, the coolant oil can be recycled through the two oil suction holes. In this way, adverse impact on flowing of the coolant oil in the dual-motor powertrain is reduced.

In an embodiment, the oil pump accommodation groove may be further configured to accommodate an oil filter, the oil pump accommodation groove includes an oil pump accommodation section and an oil filter accommodation section, and the oil pump accommodation section, the oil filter accommodation section, and the oil suction hole are sequentially arranged along the axial direction of the dual-motor powertrain. The oil filter accommodation section is configured to accommodate and fasten the oil filter, and the oil filter is configured to filter coolant oil recycled from the reducer accommodation cavity, to prevent impurities from entering a recycling path of the coolant oil, and ensure that the dual-motor powertrain operates smoothly.

In an embodiment, a projection of the heat exchanger oil outlet hole is located in a projection of the oil pump accommodation section along the radial direction of the dual-motor powertrain. In this way, the oil pump conveys the coolant oil to the heat exchanger through the heat exchanger oil outlet hole.

In an embodiment, the dual-motor powertrain further includes two heat exchangers, the two heat exchangers are respectively fastened to two intermediate housings, and the heat exchanger oil inlet hole and the heat exchanger oil outlet hole on each intermediate housing communicate with one heat exchanger. Along the axial direction of the dual-motor powertrain, the two heat exchangers are arranged on the two sides of the middle partition plate, and the two heat exchangers are arranged on two sides of the reducer accommodation cavities of the two intermediate housings.

In this embodiment of this application, a temperature of the coolant oil increases after the coolant oil cools the reducer and the motor. The heat exchanger is configured to perform heat exchange with the coolant oil whose temperature is increased. The cooled coolant oil is put into use again. In this way, cooling efficiency is improved. In this embodiment of this application, the dual-motor powertrain includes two heat exchangers, the two heat exchangers are respectively located on the two sides of the middle partition plate along the axial direction of the dual-motor powertrain, and each heat exchanger is used in one reducer and one motor. On each intermediate housing, the heat exchanger oil outlet hole communicates with the oil pump accommodation groove and the heat exchanger, and the heat exchanger oil inlet hole communicates with the heat exchanger and the housing oil outlet hole. Coolant oil flowing through the two heat exchangers does not interfere with each other, to avoid an uneven distribution of the coolant oil in the two intermediate housings.

According to a second aspect, an embodiment of this application provides an electric vehicle. The electric vehicle includes a vehicle body, a battery pack, and the dual-motor powertrain according to any embodiment of the first aspect. The battery pack and the dual-motor powertrain are fastened to the vehicle body, the dual-motor powertrain includes two motors and two reducers, a motor accommodation cavity and a reducer accommodation cavity of each intermediate housing are respectively configured to accommodate one motor and one reducer, the motor is configured to: receive electric energy provided by the battery pack, and drive a wheel of the electric vehicle through the reducer, and an oil suction hole of the dual-motor powertrain is lower than a ventilation valve of the dual-motor powertrain along a gravity direction.

In this embodiment of this application, two reducers and two motors are integrated into the dual-motor powertrain. This can increase integration of the dual-motor powertrain, reduce a volume and costs, help implement a lightweight design of the dual-motor powertrain, and improve power density. Along an axial direction of the dual-motor powertrain, a middle partition plate is arranged between two intermediate housings, two partition plate mounting surfaces of the middle partition plate each face one reducer, a reducer and a motor that are located on a same side of the middle partition plate are adjacently arranged and drivingly connected, and each reducer is configured to transfer mechanical energy from the motor to one wheel of the electric vehicle.

In this embodiment of this application, flowing of coolant oil in the dual-motor powertrain is affected by gravity, and an oil suction hole of the dual-motor powertrain is at a low position along a gravity direction, so that the coolant oil falls back to the oil suction hole under a gravity action. This improves recycling efficiency of the coolant oil and reduces a loss.

### BRIEF DESCRIPTION OF DRAWINGS

To describe technical solutions in embodiments of this application more clearly, the following describes the accompanying drawings used in embodiments of this application.
FIG. 1 is a diagram of a structure of an electric vehicle according to an embodiment of this application;
FIG. 2 is a diagram of a structure of a dual-motor powertrain and a wheel according to an embodiment of this application;
FIG. 3 is a diagram of a structure of a dual-motor powertrain according to an embodiment of this application;
FIG. 4 is a diagram of a structure of a middle partition plate according to an embodiment of this application;
FIG. 5 is a sectional view of the middle partition plate shown in FIG. 4 along AA;
FIG. 6 is a sectional view of the middle partition plate shown in FIG. 4 along BB;
FIG. 7 is a partial exploded diagram of a dual-motor powertrain according to an embodiment of this application;
FIG. 8 is a diagram of a structure of an intermediate housing according to an embodiment of this application;
FIG. 9 is a sectional view of the intermediate housing shown in FIG. 8 along CC;
FIG. 10 is a diagram of a structure of an intermediate housing according to an embodiment of this application;
FIG. 11 is a sectional view of the intermediate housing shown in FIG. 10 along DD;
FIG. 12 is a diagram of a structure of an intermediate housing according to an embodiment of this application;
FIG. 13 is a sectional view of the intermediate housing shown in FIG. 12 along EE; and
FIG. 14 is a partial exploded diagram of a dual-motor powertrain according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of' means two or more than two.

In this specification, orientation terms such as "top" and "bottom" are defined relative to orientations of structures schematically placed in the accompanying drawings. It should be understood that these orientation terms are relative concepts and are used for relative description and clarification, and may correspondingly change based on a change in an orientation in which the structure is placed.

In addition, an "embodiment" or an "implementation" mentioned in this specification means that a particular feature, structure, or characteristic described with reference to this embodiment or this implementation may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

For ease of understanding, the following first explains and describes English abbreviations and related technical terms used in embodiments of this application.

Parallel: "Parallel" defined in embodiments of this application is not limited to absolute parallelism. The definition of parallelism herein may be understood as basic parallelism, and includes non-absolute parallelism caused by factors such as an assembly tolerance, a design tolerance, and impact of structure flatness.

Vertical: "Vertical" defined in embodiments of this application is not limited to an absolute vertical intersection (where an included angle is 90 degrees) relationship. A perpendicular intersection relationship that is not absolute due to assembling tolerance, design tolerance, impact of structural flatness, or another factor is allowed. An error within a small angle range is allowed. For example, an assembling error range of 80 degrees to 100 degrees may be understood as a vertical relationship.

Surface roughness means unevenness of a surface with a small spacing and a small peak and valley.

At present, a dual-motor powertrain is partially cooled and lubricated insufficiently. An embodiment of this application provides a dual-motor powertrain with an integrated housing. The dual-motor powertrain includes two intermediate housings and a middle partition plate, and an accommodation cavity of each intermediate housing is configured to accommodate one reducer and one motor. The motor is drivingly connected to the reducer, and the motor is configured to transfer mechanical energy to the reducer. The middle partition plate includes two partition plate mounting surfaces, the two partition plate mounting surfaces face away from each other along an axial direction of the dual-motor powertrain, each partition plate mounting surface is configured to be fastened to one intermediate housing, and each intermediate housing faces one partition plate mounting surface. Each partition plate mounting surface includes two partition plate oil holes, directions of two partition plate oil holes on one partition plate mounting surface face away from directions of two partition plate oil holes on the other partition plate mounting surface along the axial direction of the dual-motor powertrain, and partition plate oil holes on the one partition plate mounting surface do not communicate with partition plate oil holes on the other partition plate mounting surface. The two partition plate oil holes on each partition plate mounting surface communicate through one internal oil passage of the middle partition plate, and the two partition plate oil holes on each partition plate mounting surface respectively communicate with one heat exchanger and an accommodation cavity through two internal oil passages of one intermediate housing. Coolant oil flowing from different heat exchangers flows to accommodation cavities of different intermediate housings through partition plate oil holes on different partition plate mounting surfaces. In this embodiment of this application, accommodation cavities of the two intermediate housings are independently supplied with oil through different heat exchangers and the partition plate oil holes that are on the two partition plate mounting surfaces and that do not communicate with each other. In this way, an uneven distribution of the coolant oil in the dual-motor powertrain is alleviated, and cooling and lubrication effect of the motor and the reducer is improved, thereby improving operating efficiency of the dual-motor powertrain.

The dual-motor powertrain provided in this embodiment of this application may be used in an electric vehicle.

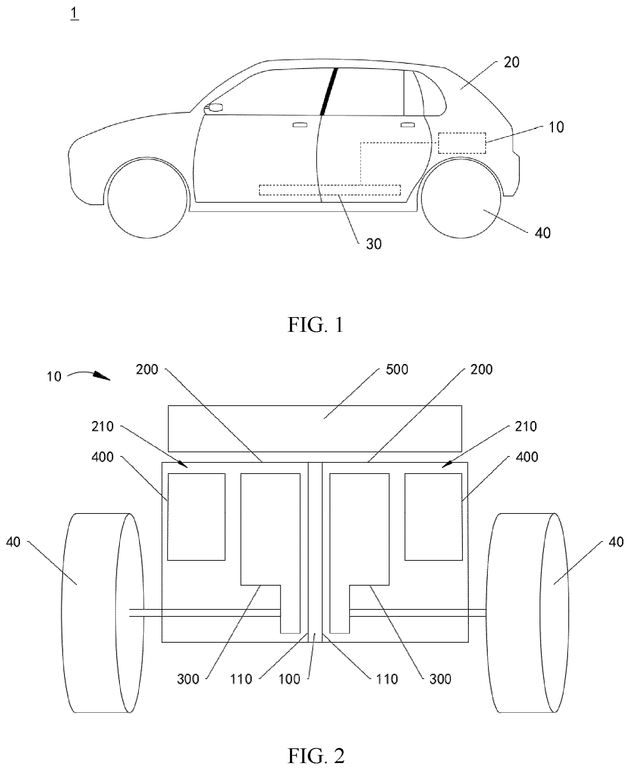

FIG. 1 is a diagram of a structure of an electric vehicle 1 according to an embodiment of this application. FIG. 2 is a diagram of a structure of a dual-motor powertrain 10 and a wheel 40 according to an embodiment of this application. In an embodiment, the electric vehicle 1 includes a vehicle body 20, a battery pack 30, and the dual-motor powertrain 10. The battery pack 30 and the dual-motor powertrain 10 are fastened to the vehicle body 20. The dual-motor powertrain 10 is configured to: receive electric energy provided by the battery pack 30, and drive the wheel 40 of the electric vehicle 1. The electric vehicle 1 is a wheeled device driven or pulled by a power apparatus.

In this embodiment of this application, the dual-motor powertrain 10 includes two reducers 300 and two motors 400 (as shown in FIG. 2). The two reducers 300 are located between the two motors 400. In an embodiment, the dual-motor powertrain provided in this embodiment of this application is a T-type dual-motor powertrain. In an embodiment, the dual-motor powertrain provided in this embodiment of this application is also referred to as a distributed powertrain.

A large volume of the dual-motor powertrain causes a long oil cooling loop, and a distribution and flowing of coolant oil in the dual-motor powertrain 10 are easily affected by factors such as a road condition. Consequently, it is difficult for a part of the dual-motor powertrain 10 to be cooled and lubricated by the coolant oil, and an internal component generates heat or is abraded severely, thereby affecting operating efficiency and safety performance of the dual-motor powertrain 10.

In this embodiment of this application, the dual-motor powertrain is improved, so that the coolant oil is distributed more evenly in the dual-motor powertrain. This avoids a problem of insufficient coolant oil in a part of the dual-motor powertrain, and improves cooling and lubrication effect of the coolant oil, thereby improving performance of the dual-motor powertrain.

The following describes in detail the dual-motor powertrain 10 provided in this embodiment of this application.

Still Refer to FIG. 2. In an embodiment, the dual-motor powertrain 10 includes two motors 400, two reducers 300, and a motor controller 500. The two reducers 300 are located between the two motors 400, and the motor controller 500 is fastened to the reducer 300 or the motor 400. Each reducer 300 is configured to be drivingly connected to one motor 400. Stator windings in the two motors 400 are connected to the motor controller 500. The motor controller 500 is configured to: receive a direct current transmitted by the battery pack 30, convert the direct current into an alternating current, and provide the alternating current for the stator windings in the two motors 400. After receiving the alternating current, the stator windings drive a motor shaft in the motor 400 to rotate. The motor shaft drives, through a reducer input shaft of the reducer 300, the wheel 40 to rotate. In an embodiment, two reducer input shafts in the dual-motor powertrain 10 each are configured to drive one wheel 40 to rotate. The dual-motor powertrain 10 is used in a rear-wheel-drive electric vehicle, a front-wheel-drive electric vehicle, or a dual-motor all-wheel-drive electric vehicle.

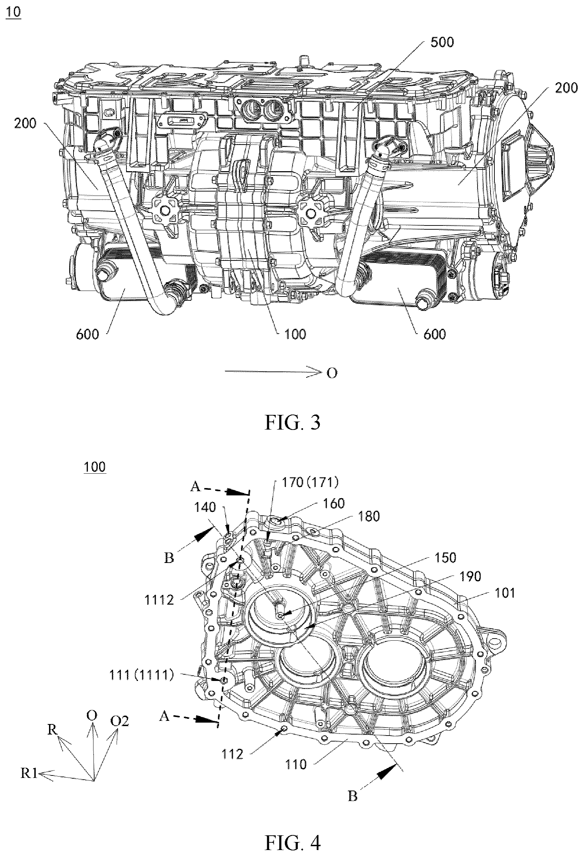

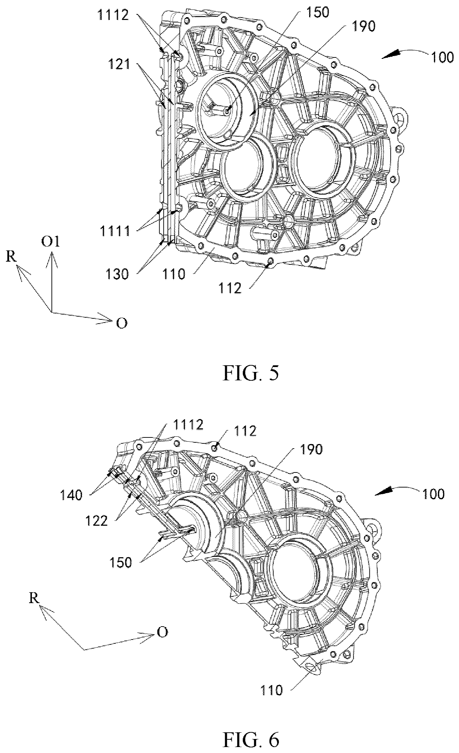

Refer to FIG. 2 to FIG. 5 together. FIG. 3 is a diagram of a structure of a dual-motor powertrain 10 according to an embodiment of this application. FIG. 4 is a diagram of a structure of a middle partition plate 100 according to an embodiment of this application. FIG. 5 is a sectional view of the middle partition plate 100 shown in FIG. 4 along AA.

In an embodiment, the dual-motor powertrain 10 includes two intermediate housings 200 and the middle partition plate 100 (as shown in FIG. 2 and FIG. 3), and an accommodation cavity 210 of each intermediate housing 200 is configured to accommodate one reducer 300 and one motor 400. The middle partition plate 100 includes two partition plate mounting surfaces 110 (as shown in FIG. 2 and FIG. 5), the two partition plate mounting surfaces 110 face away from each other along an axial direction O of the dual-motor powertrain 10 (as shown in FIG. 5), and each partition plate mounting surface 110 is configured to be fastened to one intermediate housing 200. Each partition plate mounting surface 110 includes two partition plate oil holes 111 (as shown in FIG. 4), and directions of two partition plate oil holes 111 on one partition plate mounting surface 110 face away from directions of two partition plate oil holes 111 on the other partition plate mounting surface 110 along the axial direction O of the dual-motor powertrain (as shown in FIG. 5). The two partition plate oil holes 111 on each partition plate mounting surface 110 communicate through one internal oil passage of the middle partition plate 100, and the two partition plate oil holes 111 on each partition plate mounting surface 110 respectively communicate with one heat exchanger 600 and an accommodation cavity 210 through two internal oil passages of one intermediate housing 200.

In this embodiment of this application, two reducers 300 and two motors 400 are integrated into the dual-motor powertrain 10. This can increase integration of the dual-motor powertrain 10, reduce a volume and costs, help implement a lightweight design of the dual-motor powertrain 10, and improve power density. Along the axial direction O of the dual-motor powertrain 10, the middle partition plate 100 is arranged between the two intermediate housings 200, the two partition plate mounting surfaces 110 of the middle partition plate 100 each face one reducer 300, a reducer 300 and a motor 400 that are located on a same side of the middle partition plate 100 are adjacently arranged and drivingly connected, and each reducer 300 is configured to transfer mechanical energy from the motor 400 to one wheel 40 of the electric vehicle 1.

In this embodiment of this application, the two partition plate mounting surfaces 110 each are configured to be fastened to one intermediate housing 200, and each partition plate mounting surface 110 may be a flat surface or a concave-convex surface, provided that the partition plate mounting surface 110 can be fastened to the intermediate housing 200. For example, each partition plate mounting surface 110 and a mounting surface of the intermediate housing 200 are both flat surfaces. For example, the partition plate mounting surface 110 may fit, in a concave-convex form, an end surface that is of the intermediate housing 200 and that faces the middle partition plate 100. The partition plate mounting surface 110 is an end surface that is of the middle partition plate 100 and that fits against the intermediate housing 200. In an embodiment, the partition plate mounting surface 110 may include a fastening hole and an oil hole, to facilitate fastening and oil supply between the middle partition plate 100 and the intermediate housing 200.

In this embodiment of this application, a partition plate oil hole 111 on one partition plate mounting surface 110 and a partition plate oil hole 111 on the other partition plate mounting surface 110 face directions away from each other and do not communicate with each other. The two partition plate oil holes 111 on each partition plate mounting surface 110 communicate with each other and are respectively configured to communicate with the heat exchanger 600 and the accommodation cavity 210. For ease of description, a partition plate oil hole 111 communicating with the heat exchanger 600 is referred to as a partition plate oil inlet hole 1111 (as shown in FIG. 4), a partition plate oil hole 111 communicating with the accommodation cavity 210 is referred to as a partition plate oil outlet hole 1112 (as shown in FIG. 4), and an internal oil passage that is of the middle partition plate 100 and that communicates with the partition plate oil inlet hole 1111 and the partition plate oil outlet hole 1112 is referred to as an internal communicating oil passage 121 (as shown in FIG. 5). An opening direction of the partition plate oil inlet hole 1111 is parallel to Arrangement direction of a partition plate mounting surface 110 and the intermediate housing 200, and an opening direction of the partition plate oil outlet hole 1112 is the same as the opening direction of the partition plate oil inlet hole 1111.

A partition plate oil inlet hole 1111 and a partition plate oil outlet hole 1112 that belong to a same partition plate mounting surface 110 respectively supply oil to a reducer 300 and a motor 400 arranged on the same side. Specifically, coolant oil from different heat exchangers 600 enters different internal communicating oil passages 121 of the middle partition plate 100 through each partition plate oil inlet hole 1111, flows out of the partition plate mounting surface 110 through the partition plate oil outlet hole 1112, and flows into an accommodation cavity 210 of an intermediate housing 200 arranged on a same side as the partition plate mounting surface 110, to cool and lubricate a reducer 300 and a motor 400 in the accommodation cavity 210. In this embodiment of this application, openings of two partition plate oil inlet holes 1111 face away from each other and do not communicate with each other, openings of two partition plate oil outlet holes 1112 face away from each other and do not communicate with each other, and oil paths between the middle partition plate 100 and the two intermediate housings 200 are independent of each other, to control flow of coolant oil flowing to different intermediate housings 200, so that the coolant oil is evenly distributed on two sides of the middle partition plate 100 along the axial direction O of the dual-motor powertrain 10. In an embodiment, the partition plate oil holes 111 are all integrated through die-casting. This helps strengthen structural strength of the partition plate oil hole 111, so that the partition plate oil hole 111 stably directs oil.

If accommodation cavities 210 of the two intermediate housings 200 on the two sides of the middle partition plate 100 share the partition plate oil hole 111 and the internal oil passage, distributions of the coolant oil in the two intermediate housings 200 affect each other. It can be understood that, compared with a dual-motor powertrain in which a middle partition plate 100 includes one oil inlet hole, the dual-motor powertrain 10 in this embodiment of this application has larger internal space. When a vehicle is in a poor operating condition, for example, tilts to a side, the coolant oil is thrown to one side of the dual-motor powertrain 10 due to inertia. In this case, the coolant oil is too concentrated inside an intermediate housing 200, and consequently, a part of the dual-motor powertrain 10 is supplied with insufficient oil. In addition, when the oil paths between the middle partition plate 100 and the two intermediate housings 200 communicate with each other, even if the vehicle runs smoothly and steadily, it is difficult to ensure that the coolant oil is evenly distributed in different intermediate housings 200. In this embodiment of this application, the coolant oil separately cools and lubricates reducers 300 and motors 400 in the two intermediate housings 200 through different heat exchangers 600 and independent oil paths. In this way, even if the vehicle is in a poor operating condition, for example, tilts to a side, oil distributions of coolant oil in the two intermediate housings 200 do not interfere with each other. This helps avoid a problem of too little coolant oil in an intermediate housing 200, alleviate a problem that the dual-motor powertrain 10 is partially cooled and lubricated insufficiently, and improve operating efficiency of the dual-motor powertrain 10, thereby optimizing overall vehicle performance.

In this embodiment of this application, two motors 400 and two reducers 300 are integrated into the dual-motor powertrain 10. In this way, integration is high. Partition plate oil holes 111 that are on the two partition plate mounting surfaces 110 and whose opening directions face away from each other divide an oil path between the middle partition plate 100 and the two intermediate housings 200 into two independent oil paths. The coolant oil passes through oil passages of different heat exchangers 600, the two partition plate oil inlet holes 1111, two internal communicating oil passages 121, and the two partition plate oil outlet holes 1112, and separately enters the accommodation cavities 210 of the two intermediate housings 200. In this way, the distributions of the coolant oil in the two intermediate housings 200 do not interfere with each other. This helps alleviate the problem that a part of the dual-motor powertrain 10 is supplied with insufficient oil, improve cooling and lubrication effect of the coolant oil on the reducer 300 and motor 400, and enhance performance of the dual-motor powertrain 10 and the electric vehicle 1.

It should be noted that, in this embodiment of this application, the axial direction O of the dual-motor powertrain 10 is parallel to an axial direction of the reducer 300. In addition, the reducer 300 needs to be coaxially arranged with the motor 400, so that the reducer 300 is drivingly connected to a motor shaft of the motor 400. Therefore, the axial direction O of the dual-motor powertrain 10 is also parallel to the axial direction of the motor 400.

Still refer to FIG. 5. In an embodiment, an outer circumferential surface of the middle partition plate 100 includes two first holes 130, the two first holes 130 are spaced apart along the axial direction O of the dual-motor powertrain 10, each first hole 130 communicates with two partition plate oil holes 111 on one partition plate mounting surface 110 through one internal oil passage of the middle partition plate 100, and each first hole 130 is configured to accommodate one blocking member (not shown in the figure).

In this embodiment of this application, the first hole 130 penetrates through two sides, namely, an inner side and an outer side of the middle partition plate 100 along a radial direction R of the dual-motor powertrain, and the first hole 130 facilitates processing of the internal communicating oil passage 121 inward from the outer side of the middle partition plate 100. In an embodiment, the internal communicating oil passage 121 and the first hole 130 are integrated through die-casting. In this way, the internal communicating oil passage 121 and the first hole 130 do not need to be processed separately, which helps reduce a process and reduce processing and manufacturing difficulty of the internal communicating oil passage 121. The first hole 130 communicates with the partition plate oil inlet hole 1111 and the partition plate oil outlet hole 1112 through the internal communicating oil passage 121, and the blocking member is located in the first hole 130, to block the first hole 130, and prevent coolant oil in the internal communicating oil passage 121 from being leaked from the first hole 130.

Still refer to FIG. 5. In an embodiment, a spacing between each first hole 130 and one partition plate oil hole 111 communicating with the first hole 130 is less than a spacing between each first hole 130 and the other partition plate oil hole 111 communicating with the first hole 130. In this embodiment of this application, the partition plate oil holes 111 that are on each partition plate mounting surface 110 and that communicate with the first hole 130 are the partition plate oil inlet hole 1111 and the partition plate oil outlet hole 1112. A spacing between the partition plate oil inlet hole 1111 and the first hole 130 is less than a spacing between partition plate oil outlet holes 1112. This helps the two partition plate oil holes 111 respectively fit the heat exchanger and the accommodation cavity, and shorten a movement path of the coolant oil from the heat exchanger to the partition plate oil inlet hole 1111 and from the partition plate oil outlet hole 1112 to the accommodation cavity.

Still refer to FIG. 4 and FIG. 5. In an embodiment, an outer surface of the internal communicating oil passage 121 protrudes toward the partition plate mounting surface 110, and protrusion directions of outer surfaces of the two internal communicating oil passages 121 face away from each other along the axial direction O of the dual-motor powertrain 10. In this embodiment of this application, a protrusion direction of the outer surface of the internal communicating oil passage 121 is the same as an opening direction of a partition plate oil inlet hole 1111 on the same partition plate mounting surface 110. This helps shorten a path through which the coolant oil flows from the partition plate oil inlet hole 1111 to the internal communicating oil passage 121. The protrusion directions of the outer surfaces of the two internal communicating oil passages 121 face away from each other along the axial direction O of the dual-motor powertrain 10, which can reduce an axial length of the middle partition plate 100 and the dual-motor powertrain 10, and helps implement a miniaturization design of the dual-motor powertrain 10.

In an embodiment, when an axial thickness of the middle partition plate 100 is thick, the internal communicating oil passage 121 may be formed inside the middle partition plate 100. In other words, an outer surface of the internal communicating oil passage 121 is flush with an end surface of the middle partition plate 100.

Refer to FIG. 4 and FIG. 6 together. FIG. 6 is a sectional view of the middle partition plate 100 shown in FIG. 4 along BB. In an embodiment, the outer circumferential surface of the middle partition plate 100 includes two second holes 140, the two second holes 140 are spaced apart along the axial direction O of the dual-motor powertrain 10, each second hole 140 communicates with the other partition plate oil hole 111 on one partition plate mounting surface 110 through another internal oil passage of the middle partition plate 100, and each second hole 140 is configured to accommodate one blocking member (not shown in the figure).

In this embodiment of this application, the second hole 140 penetrates through the two sides, namely, the inner side and the outer side of the middle partition plate 100 along the radial direction R of the dual-motor powertrain, and the second hole 140 facilitates processing of the another internal oil passage of the middle partition plate 100 inward from the outer side of the middle partition plate 100. In an embodiment, the second hole 140 and the another internal oil passage of the middle partition plate 100 are integrated through die-casting. In this way, the second hole 140 and the another internal oil passage of the middle partition plate 100 do not need to be processed separately, which helps reduce a process and reduce processing and manufacturing difficulty of the internal oil passage. The second hole 140 communicates with the partition plate oil outlet hole 1112 on the partition plate mounting surface 110 through the another internal oil passage of the middle partition plate 100, and the blocking member is located in the second hole 140, to block the second hole 140, and prevent coolant oil in the internal oil passage from being leaked from the second hole 140.

Still refer to FIG. 4 and FIG. 5. In an embodiment, a spacing between the second hole 140 and the first hole 130 is greater than a spacing between the two partition plate oil holes 111 on each partition plate mounting surface 110. In this embodiment of this application, both the first hole 130 and the second hole 140 are disposed on the outer circumferential surface of the middle partition plate 100. If a spacing between two partition plate oil holes 111 that belong to a same partition plate mounting surface 110 is too large, an internal communicating oil passage between the two partition plate oil holes is too long, thereby increasing a loss of coolant oil on a transmission path. In this embodiment of this application, a transmission path of the coolant oil in the middle partition plate can be shortened, and processing difficulty of the internal oil passage can be further reduced.

Still refer to FIG. 4. In an embodiment, a spacing between each second hole 140 and the other partition plate oil hole 111 communicating with the second hole 140 is less than a spacing between the one partition plate oil hole 111 and the other partition plate oil hole 111 communicating with the second hole 140. In this embodiment of this application, a spacing between the second hole 140 and the partition plate oil outlet hole 1112 is small, which is equivalent to that a length of an internal oil passage between the second hole 140 and the partition plate oil outlet hole 1112 is small. This helps reduce processing difficulty. In addition, the internal oil passage between the second hole 140 and the partition plate oil outlet hole 1112 is not used for flowing of the coolant oil. Therefore, in this embodiment of this application, the internal oil passage is prevented from occupying too large space, thereby improving space utilization.

Still refer to FIG. 6. In an embodiment, the middle partition plate 100 further includes two rotating shaft oil holes 150, the two rotating shaft oil holes 150 are respectively arranged on same sides as the two partition plate mounting surfaces 110 along the axial direction O of the dual-motor powertrain, and each second hole 140 further communicates, through the another internal oil passage of the middle partition plate 100, with one rotating shaft oil hole 150 distributed on a same side as the other partition plate oil hole 111; and along a radial direction R of the dual-motor powertrain, each rotating shaft oil hole 150 is located on an inner side of the other partition plate oil hole 111 distributed on a same side as the rotating shaft oil hole 150, and each second hole 140 is located on an outer side of the other partition plate oil hole 111.

In this embodiment of this application, in the radial direction R of the dual-motor powertrain, the partition plate oil outlet hole 1112 is located between the second hole 140 and the rotating shaft oil hole 150, and the second hole 140, the partition plate oil outlet hole 1112, and the rotating shaft oil hole 150 sequentially communicate. An internal oil passage that is of the middle partition plate 100 and that is used to communicate with the second hole 140, the partition plate oil outlet hole 1112, and the rotating shaft oil hole 150 is referred to as a radial communicating oil passage 122, and the internal communicating oil passage 121 communicates with the rotating shaft oil hole 150 through the radial communicating oil passage 122. A plurality of oil directing structures such as the partition plate oil inlet hole 1111, the internal communicating oil passage 121, the partition plate oil outlet hole 1112, the radial communicating oil passage 122, and the rotating shaft oil hole 150 are integrated into the middle partition plate 100. In this way, the middle partition plate 100 has a plurality of functions, and the dual-motor powertrain 10 is miniaturized. The rotating shaft oil hole 150 and the partition plate oil outlet hole 1112 are configured to direct the coolant oil to different parts of the intermediate housing arranged on the same side. In an embodiment, each rotating shaft oil hole 150 is configured to communicate with a motor shaft in a motor 400 distributed on the same side, and the coolant oil flows through the rotating shaft oil hole 150 to the motor shaft in the motor 400 distributed on the same side, to implement cooling and lubrication of the motor 400.

In this embodiment of this application, the axial direction O of the dual-motor powertrain 10 is parallel to an axial direction of the motor. Therefore, an axis of the rotating shaft oil hole 150 is coaxial with an axis of the motor shaft. An opening direction of the rotating shaft oil hole 150 is parallel to Arrangement direction of a partition plate mounting surface 110 and the intermediate housing 200. This helps the rotating shaft oil hole 150 direct the coolant oil to flow to the motor shaft in the intermediate housing 200.

Still refer to FIG. 4 and FIG. 6. In an embodiment, an outer surface of the radial communicating oil passage 122 protrudes toward the partition plate mounting surface (as shown in FIG. 4 and FIG. 6), and protrusion directions of outer surfaces of two radial communicating oil passages 122 face away from each other along the axial direction O of the dual-motor powertrain 10 (as shown in FIG. 6). In this embodiment of this application, the partition plate mounting surface 110, the radial communicating oil passage 122, and the internal communicating oil passage 121 of the middle partition plate 100 form a protrusion structure, and an axial thickness of other parts that do not need to form the protrusion structure is thinner. This helps reduce a weight of the middle partition plate 100 and reduces a material, and helps implement a miniaturization and lightweight design of the dual-motor powertrain 10.

Still refer to FIG. 4 and FIG. 6. In an embodiment, an axis of the radial communicating oil passage 122 is coaxial with an axis of the second hole 140 (as shown in FIG. 6), and an extension direction of the radial communicating oil passage 122 intersects with an extension direction of the internal communicating oil passage 121 (as shown in FIG. 4). In this embodiment of this application, on a same partition plate mounting surface 110, an axis of a radial communicating oil passage 122 coincides with an axis of a second hole 140, and an extension direction of the radial communicating oil passage 122 intersects with an extension direction of the internal communicating oil passage 121. In this way, a part of the radial communicating oil passage 122 and a part of the internal communicating oil passage 121 are spaced apart on the radial direction R of the dual-motor powertrain 10, to provide space for arranging another structure.

It should be noted that, in this embodiment of this application, the radial direction R of the dual-motor powertrain 10 is parallel to a radial direction of the reducer 300. In addition, the reducer 300 needs to be coaxially arranged with the motor 400, so that the reducer 300 is drivingly connected to the motor shaft of the motor 400. Therefore, the radial direction R of the dual-motor powertrain 10 is also parallel to a radial direction of the motor 400.

Still refer to FIG. 5 and FIG. 6. In an embodiment, projections of at least one of partition plate oil inlet holes 1111 and partition plate oil outlet holes 1112 on the two partition plate mounting surfaces 110, and the two internal communicating oil passages 121 and the radial communicating oil passages 122 of the middle partition plate 100 partially overlap. In this embodiment of this application, the partition plate oil inlet hole 1111, the internal communicating oil passage 121, the partition plate oil outlet hole 1112, and the radial communicating oil passage 122 are an oil path from one partition plate mounting surface 110 of the middle partition plate 100 to an intermediate housing 200 arranged on the same side, and projections of oil paths of the two partition plate mounting surfaces 110 at least partially overlap along the axial direction O of the dual-motor powertrain 10. This helps reduce a difference between oil resistance of the coolant oil on the two sides of the middle partition plate 100. In an embodiment, the partition plate oil inlet holes 1111 and the partition plate oil outlet holes 1112 on the two partition plate mounting surfaces 110, and the two internal communicating oil passages 121 and the radial communicating oil passages 122 of the middle partition plate 100 are symmetrically arranged. In this embodiment of this application, consistency between the oil resistance on the two sides of the middle partition plate 100 can be further improved.

Refer to FIG. 4. In an embodiment, each partition plate mounting surface 110 further includes a plurality of partition plate fastening holes 112, the partition plate fastening hole 112 is configured to be fastened to one intermediate housing 200, an opening of each partition plate fastening hole 112 faces the one intermediate housing 200 (not shown in the figure), the plurality of partition plate fastening holes 112 are sequentially spaced apart on an edge of the middle partition plate 100, and the two partition plate oil holes 111 are arranged on an inner side of the plurality of partition plate fastening holes 112 along the radial direction R of the dual-motor powertrain.

In this embodiment of this application, the two intermediate housings 200 are arranged on the two sides of the middle partition plate 100 along the axial direction O of the dual-motor powertrain, and each partition plate mounting surface 110 is fastened, through the partition plate fastening hole 112, to one intermediate housing 200 distributed on the same side. It can be understood that, end surfaces of the plurality of partition plate fastening holes 112 are flush, to implement a close connection between the partition plate fastening holes 112 and the intermediate housing 200. The plurality of partition plate fastening holes 112 are located at the edge of the middle partition plate 100, and the partition plate oil inlet hole 1111 and the partition plate oil outlet hole 1112 are surrounded on the inner side, to help prevent the coolant oil from being leaked to the outer side and improve utilization of the coolant oil. The first hole 130 and the second hole 140 are disposed on the outer circumferential surface of the middle partition plate 100 along the radial direction R of the dual-motor powertrain, and both the first hole 130 and the second hole 140 are located on an outer side of the plurality of partition plate fastening holes 112 along the radial direction R of the dual-motor powertrain. This helps form the first hole 130 and the second hole 140, and further helps form an internal communicating oil passage 121 in the first hole 130 and form a radial communicating oil passage 122 in the second hole 140.

Still refer to FIG. 4 to FIG. 6. In an embodiment, the middle partition plate 100 further includes two reducer bearing fastening grooves 190 (shown in FIG. 4 to FIG. 6), the two reducer bearing fastening grooves 190 are respectively arranged on same sides as the two partition plate mounting surfaces 110 along the axial direction O of the dual-motor powertrain, and each reducer bearing fastening groove 190 is configured to fasten an outer ring of a reducer bearing (not shown). Along a radial direction R1 of the dual-motor powertrain 10, the partition plate oil inlet hole 1111 and the partition plate oil outlet hole 1112 on each partition plate mounting surface 110 are arranged between the reducer bearing fastening groove 190 and the partition plate fastening hole 112 (as shown in FIG. 4), and each rotating shaft oil hole 150, the reducer bearing fastening groove 190, and the partition plate oil outlet hole 1112 that are on the middle partition plate 100 are sequentially spaced apart (as shown in FIG. 5). Along the radial direction R of the dual-motor powertrain 10, each first hole 130 and each second hole 140 on the middle partition plate 100 are exposed outside the partition plate fastening hole 112 (as shown in FIG. 5 and FIG. 6), and a part of the internal communicating oil passage 121 located between the partition plate oil inlet hole 1111 and the partition plate oil outlet hole 1112 is arranged between the partition plate fastening hole 112 and the reducer bearing fastening groove 190 (as shown in FIG. 4).

In this embodiment of this application, the middle partition plate 100 fastens the reducer bearing through the reducer bearing fastening groove 190, and the reducer bearing is configured to bear a load, to reduce friction inside the reducer 300. On a same partition plate mounting surface 110, along the radial direction R of the dual-motor powertrain 10, the partition plate oil inlet hole 1111, the partition plate oil outlet hole 1112, and the part of the internal communicating oil passage 121 located between the partition plate oil inlet hole 1111 and the partition plate oil outlet hole 1112 are all arranged between the partition plate fastening hole 112 and the reducer bearing fastening groove 190. Arrangement is compact, which helps optimize internal layout of the dual-motor powertrain 10.

In this embodiment of this application, along the radial direction R of the dual-motor powertrain 10, there is a gap between each rotating shaft oil hole 150, the reducer bearing fastening groove 190, and the partition plate oil outlet hole 1112 that are on the middle partition plate 100. A radial gap between the rotating shaft oil hole 150 and the reducer bearing fastening groove 190 can provide space for accommodating the reducer bearing, and a radial gap between the reducer bearing fastening groove 190 and the partition plate oil outlet hole 1112 can avoid adverse impact of the reducer bearing on oil directing of the partition plate oil outlet hole 1112. The first hole 130 (as shown in FIG. 5) and the second hole 140 (as shown in FIG. 6) that are on the middle partition plate 100 are exposed on the outer circumferential surface of the middle partition plate 100, to die-cast the internal communicating oil passage 121 and the radial communicating oil passage 122, and use the blocking member for blocking. The outer circumferential surface of the middle partition plate 100 is an outer surface that is of the middle partition plate 100 and that is away from the reducer bearing fastening groove 190 along the radial direction R of the dual-motor powertrain 10.

In an embodiment, the middle partition plate 100 includes a rotating shaft protrusion (not shown in the figure), the rotating shaft protrusion protrudes toward an intermediate housing 200 arranged on the same side, the rotating shaft oil hole 150 penetrates through the rotating shaft protrusion along the axial direction O of the dual-motor powertrain, and the rotating shaft protrusion protrudes from a groove bottom of the reducer bearing fastening groove 190. In an embodiment, an axial length of the rotating shaft protrusion is the same as a groove depth of the reducer bearing fastening groove 190. In an embodiment, an axial length of the rotating shaft protrusion is greater than a groove depth of the reducer bearing fastening groove 190, so that the rotating shaft oil hole of the rotating shaft protrusion can penetrate into a reducer accommodation cavity, to convey coolant oil to the motor shaft.

In an embodiment, an end surface of a partition plate fastening hole 112, an end surface of a partition plate oil inlet hole 1111, and an end surface of a partition plate oil outlet hole 1112 that are of the middle partition plate 100 and that are arranged on the same side are flush along the axial direction O of the dual-motor powertrain 10. In this embodiment of this application, the partition plate fastening hole 112, the partition plate oil inlet hole 1111, and the partition plate oil outlet hole 1112 all protrude toward an intermediate housing 200 arranged on the same side. The partition plate fastening hole 112 is configured to fasten the intermediate housing 200 arranged on the same side. The end surface of the partition plate oil inlet hole 1111, the end surface of the partition plate oil outlet hole 1112, and the end surface of the partition plate fastening hole 112 are flush, which helps improve stability and sealing of a connection between the middle partition plate 100 and the intermediate housing 200. In some other embodiments, an end surface of the partition plate oil inlet hole 1111 and an end surface of the partition plate oil outlet hole 1112 on each partition plate mounting surface 110 may not be flush with the partition plate fastening hole 112, provided that the connection and sealing between the middle partition plate 100 and the intermediate housing 200 are not affected.

In an embodiment, an inner hole wall of the partition plate oil inlet hole 1111, the internal communicating oil passage 121, an inner hole wall of the partition plate oil outlet hole 1112, the radial communicating oil passage 122, and an inner hole wall of the rotating shaft oil hole 150 are rough surfaces. The end surface of the partition plate fastening hole 112, the end surface of the partition plate oil inlet hole 1111, and the end surface of the partition plate oil outlet hole 1112 that are on the middle partition plate 100 are machined surfaces along the axial direction O of the dual-motor powertrain 10.

The rough surface is a surface formed through die-casting, and an inner wall of the rough surface has no cutting trace. The machined surface is opposite to the rough surface, and surface roughness of the rough surface is greater than surface roughness of the machined surface. The surface roughness is unevenness of a surface with a small spacing and a small peak and valley. Smaller surface roughness indicates a smoother surface.

In this embodiment of this application, in a process in which the coolant oil flows from the middle partition plate 100 to the intermediate housing 200, a surface in contact with the coolant oil includes at least the inner hole wall of the partition plate oil inlet hole 1111, the internal communicating oil passage 121, the inner hole wall of the partition plate oil outlet hole 1112, the radial communicating oil passage 122, and the inner hole wall of the rotating shaft oil hole 150. Because the partition plate oil inlet hole 1111, the internal communicating oil passage 121, the partition plate oil outlet hole 1112, the radial communicating oil passage 122, and the rotating shaft oil hole 150 are all integrated through die-casting, an air hole is easily generated inside a die-casted component. If these surfaces are machined, a cutting operation may expose a part of air holes. Consequently, the coolant oil flows into the air hole, and the coolant oil cannot be effectively used. In this embodiment of this application, all surfaces of the middle partition plate 100 that are in contact with the coolant oil are rough surfaces. This can prevent the coolant oil from flowing into the air hole, and improve utilization of the coolant oil.

In this embodiment of this application, along the axial direction O of the dual-motor powertrain 10, the end surface of the partition plate fastening hole 112, the end surface of the partition plate oil inlet hole 1111, and the end surface of the partition plate oil outlet hole 1112 on the middle partition plate 100 are cut, so that the middle partition plate 100 is more closely connected to the intermediate housing, to ensure sealing.

Still refer to FIG. 4. In an embodiment, the outer circumferential surface of the middle partition plate 100 includes at least one ventilation valve fastening hole 160, and each ventilation valve fastening hole 160 is configured to accommodate and fasten one ventilation valve; and a spacing between each ventilation valve fastening hole 160 and the other partition plate oil hole 111 on each partition plate mounting surface 110 is less than a spacing between each ventilation valve fastening hole 160 and the one partition plate oil hole 111 on each partition plate mounting surface 110.

A part of components of the reducer 300 and the motor 400 generates heat during operation, causing thermal expansion of gas in the intermediate housing 200. If internal gas of the dual-motor powertrain 10 is not adjusted and controlled, high atmospheric pressure caused by expanded gas may cause mechanical damage to the reducer 300 and the motor 400. In this embodiment of this application, the ventilation valve fastening hole 160 is configured to accommodate the ventilation valve. The partition plate oil outlet hole 1112 is closer to the ventilation valve fastening hole 160 than the partition plate oil inlet hole 1111. The ventilation valve can balance internal and external atmospheric pressure of the dual-motor powertrain 10, to avoid harming safety performance of the dual-motor powertrain 10 by high atmospheric pressure.

Still refer to FIG. 4. In an embodiment, the middle partition plate 100 further includes a communication hole 170, and the communication hole 170 is configured to communicate with two sides of the middle partition plate 100 and the ventilation valve fastening hole 160; a spacing between the communication hole 170 and the other partition plate oil hole 111 on each partition plate mounting surface 110 is less than a spacing between the communication hole 170 and the one partition plate oil hole 111 on each partition plate mounting surface 110; and a spacing between the communication hole 170 and the ventilation valve fastening hole 160 is less than a spacing between the communication hole 170 and the other partition plate oil hole 111 on each partition plate mounting surface 110.

In this embodiment of this application, the two partition plate mounting surfaces 110 of the middle partition plate 100 each face an accommodation cavity 210 of one intermediate housing 200 along the axial direction O of the dual-motor powertrain 10, and the communication hole 170 penetrates through the two partition plate mounting surfaces 110 of the middle partition plate 100 along the axial direction O of the dual-motor powertrain 10, so that atmospheric pressure of the accommodation cavities 210 of the two intermediate housings is balanced.

In this embodiment of this application, a distance between the communication hole 170 and the ventilation valve fastening hole 160 is less than a distance between the communication hole 170 and the partition plate oil outlet hole 1112. The distance between the communication hole 170 and the ventilation valve fastening hole 160 is compared with the distance between the communication hole 170 and the partition plate oil outlet hole 1112. The distance between the communication hole 170 and the ventilation valve fastening hole 160 is smaller. The internal gas of the dual-motor powertrain 10 moves to an outer side of the dual-motor powertrain 10 through the communication hole 170 and the ventilation valve fastening hole 160 in sequence. This helps shorten a gas transmission path and reduce wind resistance. The distance between the communication hole 170 and the partition plate oil outlet hole 1112 is larger. The partition plate oil outlet hole 1112 is configured to direct the coolant oil to an inner cavity of the intermediate housing 200, to help avoid mutual impact between the coolant oil and the internal gas in a moving process, prevent the coolant oil from moving between the two intermediate housings 200 through the communication hole 170, and ensure that the coolant oil inside the intermediate housings 200 on two sides is evenly distributed.

In this embodiment of this application, the distance between the communication hole 170 and the partition plate oil outlet hole 1112 is less than a distance between the communication hole 170 and the partition plate oil inlet hole 1111. The distance between the communication hole 170 and the partition plate oil outlet hole 1112 is compared with the distance between the communication hole 170 and the partition plate oil inlet hole 1111. The partition plate oil outlet hole 1112 and the partition plate oil inlet hole 1111 are separately used to communicate with different parts of the intermediate housing 200. The distance between the communication hole 170 and the partition plate oil inlet hole 1111 is larger, which helps match Arrangement of components in the intermediate housing 200. In an embodiment, a mounting position of the communication hole 170 may be higher than a mounting position of the partition plate oil inlet hole 1111, so that a height between the two mounting positions is large, to help the coolant oil flow from a lower position to the middle partition plate 100. In this way, the internal gas flows at a higher position for a balance, to avoid mutual interference between the flowing gas and the coolant oil at the lower position.

Still refer to FIG. 4. In an embodiment, the middle partition plate 100 includes two partition plate fastening protrusions 101; along the axial direction O of the dual-motor powertrain, the two partition plate mounting surfaces 110 are respectively end surfaces that are of the two partition plate fastening protrusions 101 and that face the two intermediate housings 200; and protrusion directions of the two partition plate fastening protrusions 101 face away from each other. The ventilation valve fastening hole 160 penetrates through the partition plate fastening protrusions 101 on the two partition plate mounting surfaces 110, and a projection of the ventilation valve fastening hole 160 partially overlaps a projection of the partition plate fastening protrusion 101 along the axial direction O of the dual-motor powertrain 10. In this embodiment of this application, the ventilation valve fastening hole 160 penetrates through two sides of the two partition plate fastening protrusions 101 along the radial direction R of the dual-motor powertrain 10, so that the ventilation valve fastening hole 160 communicates with inner cavities of the two intermediate housings 200 through the communication hole 170. The ventilation valve fastening hole 160 is enclosed by penetrated parts of the two partition plate fastening protrusions 101, to help improve structural stability of the ventilation valve fastening hole 160.

Still refer to FIG. 4. In an embodiment, along an axial direction O2 of the ventilation valve fastening hole 160, an opening at one end of the ventilation valve fastening hole 160 is located in the partition plate fastening protrusion 101, and an opening at one end of the ventilation valve fastening hole 160 is exposed on the partition plate fastening protrusion 101. The projection of the ventilation valve fastening hole 160 partially overlaps a projection of the communication hole 170 along the axial direction O2 of the ventilation valve fastening hole 160.

In this embodiment of this application, in the axial direction O2 of the ventilation valve fastening hole 160, the opening at one end of the ventilation valve fastening hole 160 extends into an inner side of the partition plate fastening protrusion 101, the communication hole 170 is located on the inner side of the partition plate fastening protrusion 101, and the projection of the ventilation valve fastening hole 160 partially overlaps the projection of the communication hole 170, so that the ventilation valve fastening hole 160 communicates with the communication hole 170. An opening at the other end of the ventilation valve fastening hole 160 extends out of an outer side of the partition plate fastening protrusion 101, so that the ventilation valve fastening hole 160 communicates with the outer side of the partition plate fastening protrusion 101, and the ventilation valve fastening hole 160 is further die-cast from the outer side of the partition plate fastening protrusion 101, thereby reducing processing difficulty. In an embodiment, the axial direction O2 of the ventilation valve fastening hole 160 intersects with the axial direction O of the dual-motor powertrain 10. In this embodiment of this application, because the ventilation valve fastening hole 160 needs to penetrate through the two partition plate fastening protrusions 101, the axial direction O2 of the ventilation valve fastening hole 160 intersects with the axial direction O of the dual-motor powertrain 10. In other words, a penetration direction of the ventilation valve fastening hole 160 intersects with the axial direction O of the dual-motor powertrain 10. This can prevent the ventilation valve fastening hole 160 from occupying too large space in the axial direction O of the dual-motor powertrain 10, and help reduce a volume of the dual-motor powertrain 10.

It should be noted that, in this embodiment of this application, a projection of the hole, the cavity, or the passage is a projection of an area enclosed by a hole wall of the hole, an inner wall of the cavity, or an inner wall of the passage. The projection along the axial direction O of the dual-motor powertrain 10 is a projection along the axial direction O of the dual-motor powertrain 10 on a projection surface perpendicular to the axial direction O of the dual-motor powertrain 10. A projection surface along the axial direction O of the dual-motor powertrain 10 is perpendicular to the axial direction O of the dual-motor powertrain 10.

Still refer to FIG. 4. In an embodiment, the middle partition plate 100 further includes two oil baffle ribs 180 that are integrally die-cast, the communication hole 170 includes two end openings 171, the two end openings 171 are arranged oppositely along the axial direction O of the dual-motor powertrain, and each oil baffle rib 180 is fastened on a circumferential side of one end opening 171. Along the axial direction O of the dual-motor powertrain, each oil baffle rib 180 protrudes from one end opening 171 toward a direction facing away from the other end opening 171.

It can be understood that, when an internal component of the dual-motor powertrain 10 generates heat, not only the internal gas is affected, but also a part of oil liquid evaporates due to heat, to form oil mist. The oil mist moves with expanded gas. If an oil blocking structure is not used, the oil mist is accumulated in the communication hole 170, and a part of oil liquid is thrown into the communication hole 170 by a component such as a gear in the reducer 300. Consequently, the ventilation valve is blocked, affecting a balance between internal and external atmospheric pressure of the dual-motor powertrain 10.

In this embodiment of this application, each oil baffle rib 180 is configured to block oil mist and oil liquid. Specifically, the oil baffle rib 180 and the communication hole 170 are both located on the inner side of the partition plate fastening protrusion 101 along the radial direction R of the dual-motor powertrain 10, and the communication hole 170 is surrounded by the oil baffle rib 180. In a process in which the coolant oil moves toward the communication hole 170, the coolant oil needs to first get in contact with the oil baffle rib 180. The oil baffle rib 180 blocks movement of the oil mist and the oil liquid, to reduce accumulation of the coolant oil in the communication hole 170. In an embodiment, an area enclosed by the oil baffle rib 180 and the partition plate fastening protrusion 101 surrounds the communication hole 170, to help block, from different angles, the coolant oil from entering the communication hole 170. In an embodiment, along a protrusion direction of the oil baffle rib 180, a projection of the oil baffle rib 180 is in a "V" shape or a "U" shape. In some other embodiments, a projection of the oil baffle rib 180 may alternatively be in another shape, provided that it is ensured that the oil baffle rib 180 can block the coolant oil from entering the communication hole 170.

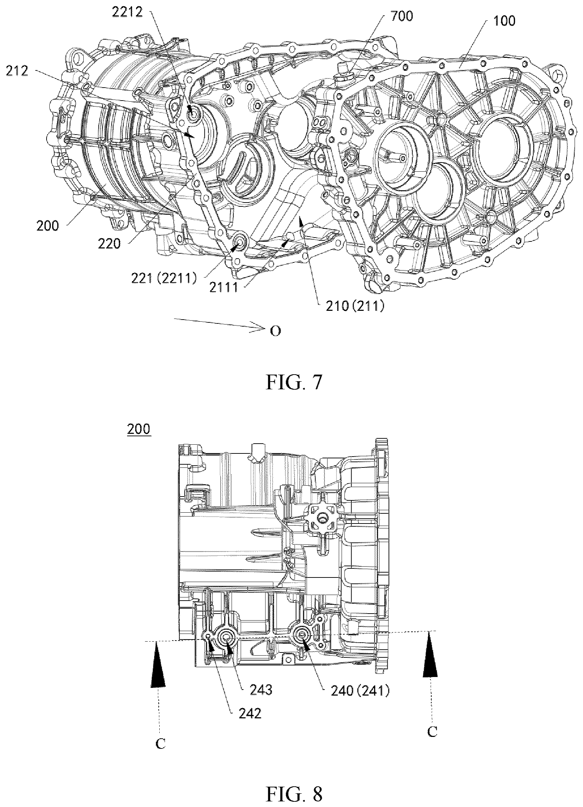

FIG. 7 is a partial exploded diagram of a dual-motor powertrain 10 according to an embodiment of this application. In an embodiment, each intermediate housing 200 includes a housing mounting surface 220, the housing mounting surface 220 of each intermediate housing 200 is configured to be fastened to one partition plate mounting surface 110 of the middle partition plate 100, each housing mounting surface 220 includes two housing oil holes 221, and the two housing oil holes 221 respectively communicate with the heat exchanger 600 and the accommodation cavity 210 through two internal oil passages of the same intermediate housing 200; and the two housing oil holes 221 on each housing mounting surface 220 respectively communicate with two partition plate oil holes 111 on the one partition plate mounting surface 110 fastened to the housing mounting surface 220, and each housing oil hole 221 and one partition plate oil hole 111 communicating with each housing oil hole 221 are arranged along the axial direction O of the dual-motor powertrain.

In this embodiment of this application, each housing mounting surface 220 is configured to be fastened to one partition plate mounting surface 110. Each housing mounting surface 220 is not necessarily a flat surface, provided that the housing mounting surface 220 can be fastened to the middle partition plate 100. For example, the housing mounting surface 220 may fit the partition plate mounting surface 110 in a concave-convex form. The housing mounting surface 220 is an end surface that is of the intermediate housing 200 and that fits against the middle partition plate 100. In an embodiment, the housing mounting surface 220 may include a fastening hole and an oil hole, to facilitate fastening and oil supply between the intermediate housing 200 and the middle partition plate 100.

In this embodiment of this application, the two housing oil holes 221 on each housing mounting surface 220 are respectively configured to communicate with the heat exchanger 600 and the accommodation cavity 210. For ease of description, a housing oil hole 221 configured to communicate with the heat exchanger 600 is referred to as a housing oil outlet hole 2211 (as shown in FIG. 7), and a housing oil hole 221 configured to communicate with the accommodation cavity 210 is referred to as a housing oil inlet hole 2212 (as shown in FIG. 7). The housing oil outlet hole 2211 on each intermediate housing 200 communicates with the partition plate oil inlet hole 1111 on one partition plate mounting surface 110, and the housing oil outlet hole 2211 is configured to convey the coolant oil from the heat exchanger 600 to the middle partition plate 100. The housing oil inlet hole 2212 on each intermediate housing 200 communicates with a partition plate oil outlet hole 1112 on one partition plate mounting surface 110, and the housing oil inlet hole 2212 is configured to convey the coolant oil from the middle partition plate 100 to the accommodation cavity 210 of the intermediate housing 200. Arrangement direction of the housing oil hole 221 and the partition plate oil hole 111 is parallel to Arrangement direction of the intermediate housing 200 and the middle partition plate 100, to help reduce resistance existing when the coolant oil flows between the middle partition plate 100 and the intermediate housing.

In an embodiment, along the axial direction O of the dual-motor powertrain 10, a projection of the housing oil outlet hole 2211 on each intermediate housing 200 at least partially overlaps a projection of the partition plate oil inlet hole 1111 on the partition plate mounting surface 110 distributed on the same side (not shown in the figure). In this embodiment of this application, the coolant oil flows between the housing oil outlet hole 2211 and the partition plate oil inlet hole 1111, to help reduce flowing resistance of the coolant oil.

In an embodiment, a sealing groove (not shown in the figure) is disposed on a circumferential side of each housing oil hole 221, and the sealing groove is configured to accommodate a sealing ring. When the housing oil hole 221 abuts against and fits against the partition plate oil hole 111, the sealing ring is configured to seal a gap between the housing oil hole 221 and the partition plate oil hole 111. In an embodiment, a sealing groove is disposed on a circumferential side of the partition plate oil hole 111 to accommodate the sealing ring, to seal the gap between the housing oil hole 221 and the partition plate oil hole 111.

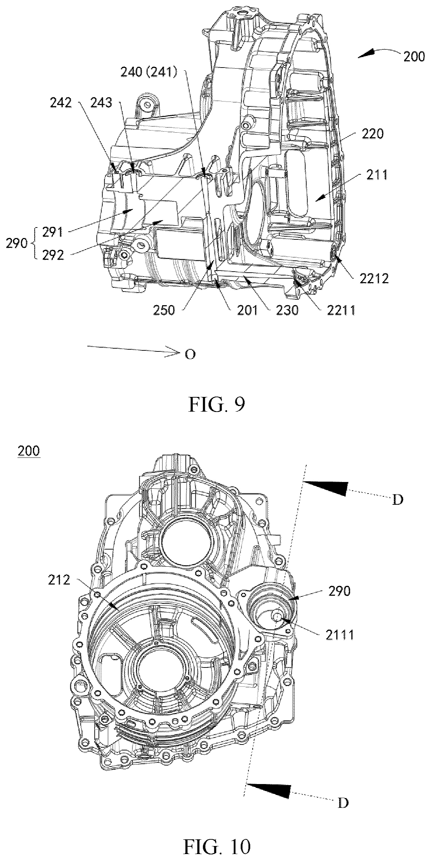

FIG. 8 is a diagram of a structure of an intermediate housing 200 according to an embodiment of this application. FIG. 9 is a sectional view of the intermediate housing 200 shown in FIG. 8 along CC. In an embodiment, each intermediate housing 200 further includes a housing oil outlet passage 230, the housing oil outlet passage 230 extends along the axial direction O of the dual-motor powertrain 10, the housing oil outlet passage 230 is configured to communicate with the housing oil outlet hole 2211, and along the axial direction O of the dual-motor powertrain 10, a projection of the housing oil outlet passage 230 of each intermediate housing 200 at least partially overlaps a projection of a partition plate oil inlet hole 1111 on a partition plate mounting surface 110 distributed on the same side. In an embodiment, the housing oil outlet passage 230 and the housing oil outlet hole 2211 are integrated through die-casting. This helps improve structural stability of the housing oil outlet passage 230 and the housing oil outlet hole 2211.

Still refer to FIG. 9. In an embodiment, each intermediate housing 200 further includes a heat exchanger mounting surface 240, the heat exchanger mounting surface 240 is configured to fasten the heat exchanger 600, the heat exchanger mounting surface 240 includes a heat exchanger oil inlet hole 241, and the heat exchanger oil inlet hole 241 of each intermediate housing 200 is configured to: communicate with an oil outlet of the heat exchanger 600, and communicate with one housing oil hole 221 through one internal oil passage of the same intermediate housing 200; and an opening direction of the heat exchanger oil inlet hole 241 of each intermediate housing 200 intersects with the axial direction O of the dual-motor powertrain 10.

In this embodiment of this application, the heat exchanger mounting surface 240 is configured to be fastened to the heat exchanger 600, and the heat exchanger oil inlet hole 241 is located on the heat exchanger mounting surface 240. In an embodiment, the heat exchanger mounting surface 240 further includes a heat exchanger fastening hole 242, the heat exchanger fastening hole 242 is configured to fasten the heat exchanger 600, and the heat exchanger fastening hole 242 and the heat exchanger oil inlet hole 241 are coplanar. The heat exchanger oil inlet hole 241 is configured to sequentially direct, to the housing oil outlet hole 2211 and the partition plate oil inlet hole 1111, the coolant oil conveyed by the heat exchanger 600. The heat exchanger 600 is configured to: cool the coolant oil, and then convey the cooled coolant oil to the middle partition plate 100. In this way, cooling efficiency of the coolant oil on the reducer 300 and the motor 400 is improved. The opening direction of the heat exchanger oil inlet hole 241 on each intermediate housing 200 intersects with the axial direction O of the dual-motor powertrain 10, to prevent a passage between the heat exchanger oil inlet hole 241 and the housing oil outlet hole 2211 from occupying too long space in the axial direction O of the dual-motor powertrain 10, and reduce an axial size of the dual-motor powertrain 10.

Still refer to FIG. 9. In an embodiment, each intermediate housing 200 further includes a heat exchanger oil inlet passage 250, the heat exchanger oil inlet passage 250 is configured to communicate with the heat exchanger oil inlet hole 241 and the housing oil outlet hole 2211, and an extension direction of the heat exchanger oil inlet passage 250 intersects with the axial direction O of the dual-motor powertrain 10. In an embodiment, the heat exchanger oil inlet hole 241 facilitates processing of the heat exchanger oil inlet passage 250 inward from an outer side of the heat exchanger mounting surface 240. In an embodiment, the heat exchanger oil inlet hole 241 and the heat exchanger oil inlet passage 250 are integrated through die-casting. In this way, the heat exchanger oil inlet hole 241 and the heat exchanger oil inlet passage 250 do not need to be processed separately, which helps reduce a process and improve structural strength of the heat exchanger oil inlet hole 241 and the heat exchanger oil inlet passage 250. In an embodiment, an outer circumferential surface of each intermediate housing 200 further includes a heat exchanger oil inlet hole 201, an opening direction of the heat exchanger oil inlet hole 201 and an opening direction of the heat exchanger oil inlet hole 241 face away from each other, the heat exchanger oil inlet passage 250 and the heat exchanger oil inlet hole 201 are integrated through die-casting, and the heat exchanger oil inlet hole 201 facilitates processing of the heat exchanger oil inlet passage 250 inward from an outer side of the intermediate housing 200. In an embodiment, the heat exchanger oil inlet hole 201 and the heat exchanger oil inlet hole 241 are separately provided to form the heat exchanger oil inlet passage 250 for mutual communication.

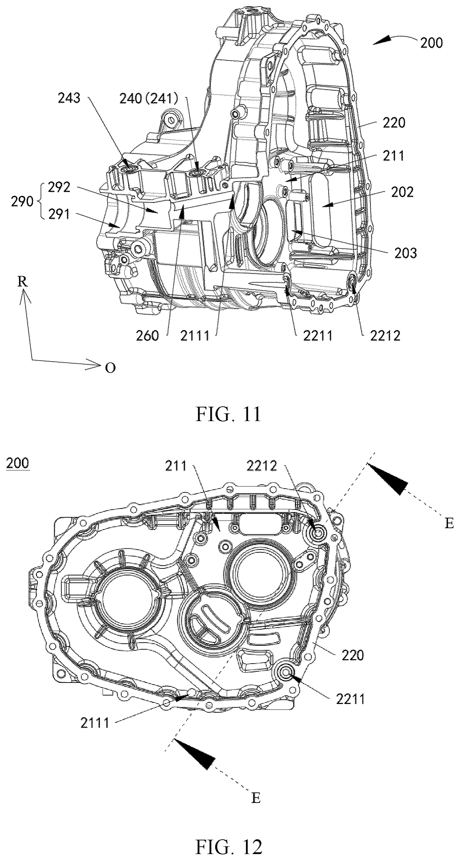

Refer to FIG. 7, FIG. 10, and FIG. 11. FIG. 10 is a diagram of a structure of an intermediate housing 200 according to an embodiment of this application. FIG. 11 is a sectional view of the intermediate housing 200 shown in FIG. 10 along DD. In an embodiment, the heat exchanger mounting surface 240 of each intermediate housing 200 further includes a heat exchanger oil outlet hole 243 (as shown in FIG. 11), the accommodation cavity 210 of each intermediate housing 200 includes a reducer accommodation cavity 211 and a motor accommodation cavity 212 (as shown in FIG. 7), an inner wall of each reducer accommodation cavity 211 includes an oil suction hole 2111 (as shown in FIG. 7, FIG. 10, and FIG. 11), each reducer accommodation cavity 211 communicates with the heat exchanger oil outlet hole 243 of the same intermediate housing 200 through the oil suction hole 2111 on the inner wall of the reducer accommodation cavity 211, and each motor accommodation cavity 212 communicates with the other housing oil hole 221 through the other internal oil passage of the same intermediate housing 200; the motor accommodation cavity 212, the reducer accommodation cavity 211, and the housing mounting surface 220 of each intermediate housing 200 are sequentially arranged along the axial direction O of the dual-motor powertrain (as shown in FIG. 7); and along the axial direction O of the dual-motor powertrain, the heat exchanger oil outlet hole 243, the heat exchanger oil inlet hole 241, and the housing mounting surface 220 of each intermediate housing 200 are sequentially spaced apart (as shown in FIG. 11), and the heat exchanger oil outlet hole 243, the oil suction hole 2111, and the housing mounting surface 220 of each intermediate housing 200 are sequentially spaced apart (as shown in FIG. 11).

In this embodiment of this application, the two reducers 300 of the dual-motor powertrain 10 are respectively located in the reducer accommodation cavities 211 of the two intermediate housings 200. After the coolant oil cools and lubricates the reducer 300, the coolant oil needs to be recycled through the oil suction hole 2111, to reduce costs. The oil suction hole 2111 is configured to communicate with the reducer accommodation cavity 211 and the heat exchanger oil outlet hole 243, so that the coolant oil in the reducer accommodation cavity 211 can flow into the heat exchanger 600 through the oil suction hole 2111 for cooling. The cooled coolant oil re-enters the accommodation cavity of the intermediate housing 200 through the heat exchanger oil inlet hole 241, the housing oil outlet hole 2211, and the middle partition plate 100. In this way, the coolant oil is recycled. Still refer to FIG. 11. In an embodiment, each intermediate housing 200 further includes an oil suction passage 260, the oil suction passage 260 is configured to communicate with the oil suction hole 2111 and the heat exchanger oil outlet hole 243, and an extension direction of the oil suction passage 260 intersects with the axial direction O of the dual-motor powertrain 10. The oil suction hole 2111 facilitates processing of the oil suction passage 260 inward from the inner wall of the reducer accommodation cavity 211. In an embodiment, the oil suction hole 2111 and the oil suction passage 260 are integrated through die-casting. In this way, the oil suction hole 2111 and the oil suction passage 260 do not need to be processed separately, which helps reduce a process and improve structural strength of the oil suction hole 2111 and the oil suction passage 260.

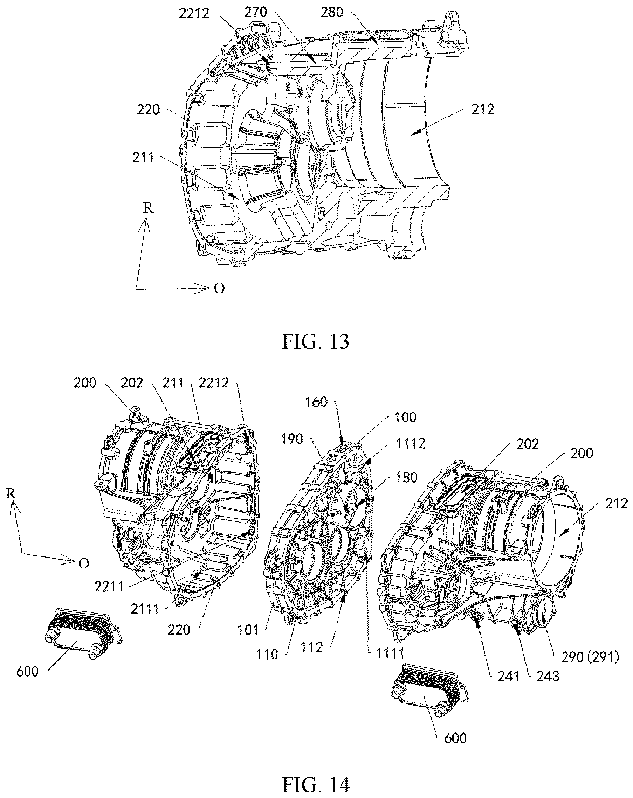

Refer to FIG. 7, FIG. 12, and FIG. 13 together. FIG. 12 is a diagram of a structure of an intermediate housing 200 according to an embodiment of this application. FIG. 13 is a sectional view of the intermediate housing 200 shown in FIG. 12 along EE. In this embodiment of this application, the middle partition plate 100 directs and distributes the coolant oil. Specifically, after the coolant oil flows into the internal oil passage of the middle partition plate 100 through the partition plate oil inlet hole 1111, a part of the coolant oil flows into the housing oil inlet hole 2212 and the motor accommodation cavity 212 of the intermediate housing 200 in sequence through the partition plate oil outlet hole 1112, and the other part of the coolant oil flows into the motor shaft through the rotating shaft oil hole 150. For example, still refer to FIG. 13. In an embodiment, each intermediate housing 200 further includes a housing oil inlet passage 270 and a communicating passage 280, and the housing oil inlet hole 2212, the housing oil inlet passage 270, and the communicating passage 280 communicate in sequence along the axial direction O of the dual-motor powertrain 10. The housing oil inlet passage 270 and a part of the communicating passage 280 extend along the axial direction O of the dual-motor powertrain 10, and a projection of the communicating passage 280 partially overlaps a projection of the motor accommodation cavity 212 in the radial direction R of the dual-motor powertrain 10. In this embodiment of this application, the housing oil inlet passage 270 and the communicating passage 280 are configured to direct the coolant oil to the motor accommodation cavity 212. The housing oil inlet hole 2212 facilitates processing of the housing oil inlet passage 270 inward from an outer side of the intermediate housing 200. In an embodiment, the housing oil inlet hole 2212 and the housing oil inlet passage 270 are integrated through die-casting. In this way, the housing oil inlet hole 2212 and the housing oil inlet passage 270 do not need to be processed separately, which helps reduce a process and improve structural strength of the housing oil inlet hole 2212 and the housing oil inlet passage 270.

Still refer to FIG. 11. In an embodiment, each intermediate housing 200 includes an oil pump accommodation groove 290, the oil pump accommodation groove 290 is configured to accommodate an oil pump (not shown in the figure), and the oil pump accommodation groove 290 of each intermediate housing 200 is configured to communicate with the heat exchanger oil outlet hole 243 and the oil suction hole 2111 of the same intermediate housing 200; and along the axial direction O of the dual-motor powertrain, a groove opening direction of the oil pump accommodation groove 290 of each intermediate housing 200 faces away from the oil suction hole 2111 communicating with the oil pump accommodation groove 290.

In this embodiment of this application, the oil pump accommodation groove 290 communicates with the heat exchanger oil outlet hole 243 and the oil suction hole 2111. The oil pump in the oil pump accommodation groove 290 is configured to bump the coolant oil from the reducer accommodation cavity 211 to the heat exchanger, to cool the coolant oil. The cooled coolant oil returns to the accommodation cavity 210 of the intermediate housing 200. In the axial direction O of the dual-motor powertrain, the oil suction hole 2111 is located at a groove bottom of the oil pump accommodation groove 290, and is spaced apart from the groove opening of the oil pump accommodation groove 290, which helps prevent the coolant oil from being leaked out of the oil pump accommodation groove 290.

Still refer to FIG. 7 and FIG. 11. In an embodiment, the oil pump accommodation groove 290, the oil suction hole 2111, and the reducer accommodation cavity 211 of each intermediate housing 200, and the middle partition plate 100 are sequentially arranged along the axial direction O of the dual-motor powertrain 10 (as shown in FIG. 7 and FIG. 11 together). A projection of the heat exchanger oil outlet hole 243 is located in a projection of the oil pump accommodation groove 290 along the radial direction R of the dual-motor powertrain 10 (as shown in FIG. 11). The opening direction of the heat exchanger oil outlet hole 243 is the same as the opening direction of the heat exchanger oil inlet hole 241 (as shown in FIG. 11).

In this embodiment of this application, the oil pump accommodation groove 290, the oil suction hole 2111, and the reducer accommodation cavity 211 of each intermediate housing 200, and the middle partition plate 100 are sequentially arranged in the axial direction O of the dual-motor powertrain 10. Arrangement is compact and regular, which helps reduce flowing resistance of the coolant oil. In the radial direction R of the dual-motor powertrain 10, the projection of the oil pump accommodation groove 290 covers the projection of the heat exchanger oil outlet hole 243, which helps shorten a transmission path of the coolant oil between the oil pump accommodation groove 290 and the heat exchanger oil outlet hole 243 and reduce a loss of the coolant oil. The opening direction of the heat exchanger oil outlet hole 243 is parallel to the opening direction of the heat exchanger oil inlet hole 241, which helps reduce processing difficulty. It should be noted that, the projection along the radial direction R of the dual-motor powertrain 10 is a projection along the radial direction R of the dual-motor powertrain 10 on a projection surface perpendicular to the radial direction R of the dual-motor powertrain 10. A projection surface along the radial direction R of the dual-motor powertrain 10 is perpendicular to the radial direction R of the dual-motor powertrain 10.

In this embodiment of this application, the two intermediate housings 200 each include one oil suction hole 2111, and the two oil suction holes 2111 are arranged on the two sides of the middle partition plate 100 along the axial direction O of the dual-motor powertrain 10. If the dual-motor powertrain 10 includes only one oil suction hole 2111, and the oil suction hole 2111 is located on one side of the middle partition plate 100, when the vehicle is tilted to a side or runs in a loop for a long period of time, only coolant oil on one side of the middle partition plate 100 can be recycled, and consequently, a part of the dual-motor powertrain 10 is supplied with insufficient coolant oil. In this embodiment of this application, oil paths in which the two oil suction holes 2111 are located do not affect each other. Even if the vehicle is in a poor operating condition, the coolant oil can be recycled through the two oil suction holes 2111. In this way, adverse impact on flowing of the coolant oil in the dual-motor powertrain 10 is reduced.

Still refer to FIG. 11. In an embodiment, the oil pump accommodation groove 290 may be further configured to accommodate an oil filter (not shown in the figure), the oil pump accommodation groove 290 includes an oil pump accommodation section 291 and an oil filter accommodation section 292, and the oil pump accommodation section 291, the oil filter accommodation section 292, and the oil suction hole 2111 are sequentially arranged along the axial direction O of the dual-motor powertrain 10. The oil filter accommodation section 292 is configured to accommodate and fasten the oil filter, and the oil filter is configured to filter coolant oil recycled from the reducer accommodation cavity 211, to prevent impurities from entering a recycling path of the coolant oil, and ensure that the dual-motor powertrain 10 operates smoothly. In an embodiment, a projection of the heat exchanger oil outlet hole 243 is located in a projection of the oil pump accommodation section 291 along the radial direction R of the dual-motor powertrain 10. In this way, the oil pump conveys the coolant oil to the heat exchanger 600 through the heat exchanger oil outlet hole 243.

Still refer to FIG. 7. In an embodiment, along a gravity direction, the oil suction hole 2111 of the dual-motor powertrain 10 is lower than a ventilation valve 700, or the oil suction hole 2111 of the dual-motor powertrain 10 is lower than the ventilation valve fastening hole 160. It can be understood that, flowing of coolant oil in the dual-motor powertrain 10 is affected by gravity, and in this embodiment of this application, the oil suction hole 2111 of the dual-motor powertrain 10 is at a low position along the gravity direction, so that the coolant oil falls back to the oil suction hole 2111 under a gravity action. This improves recycling efficiency of the coolant oil and reduces a loss.

FIG. 14 is a partial exploded view of a dual-motor powertrain 10 according to an embodiment of this application. In an embodiment, the dual-motor powertrain 10 further includes two heat exchangers 600, the two heat exchangers 600 are respectively fastened to two intermediate housings 200, and the heat exchanger oil inlet hole 241 and the heat exchanger oil outlet hole 243 on each intermediate housing 200 communicate with one heat exchanger 600. Along the axial direction O of the dual-motor powertrain 10, the two heat exchangers 600 are arranged on the two sides of the middle partition plate 100, and the two heat exchangers 600 are arranged on two sides of the reducer accommodation cavities 211 of the two intermediate housings 200.

In this embodiment of this application, a temperature of the coolant oil increases after the coolant oil cools the reducer 300 and the motor 400. The heat exchanger 600 is configured to perform heat exchange with the coolant oil whose temperature is increased. The cooled coolant oil is put into use again. In this way, cooling efficiency is improved. In this embodiment of this application, the dual-motor powertrain 10 includes two heat exchangers 600, the two heat exchangers 600 are respectively located on the two sides of the middle partition plate 100 along the axial direction of the dual-motor powertrain 10, and each heat exchanger 600 is used in one reducer 300 and one motor 400. On each intermediate housing 200, the heat exchanger oil outlet hole 243 communicates with the oil pump accommodation groove 290 and the heat exchanger 600, and the heat exchanger oil inlet hole 241 communicates with the heat exchanger 600 and the housing oil outlet hole 2211. Coolant oil flowing through the two heat exchangers 600 does not interfere with each other, to avoid an uneven distribution of the coolant oil in the two intermediate housings 200.

In an embodiment, the heat exchanger 600 covers the heat exchanger oil inlet hole 241 and the heat exchanger oil outlet hole 243; or along an axial direction of the heat exchanger oil inlet hole 241, a projection of the heat exchanger 600 covers a projection of the heat exchanger oil inlet hole 241 and a projection of the heat exchanger oil outlet hole 243.

Still refer to FIG. 11 and FIG. 14. Each intermediate housing 200 includes a winding wire entry hole 202 and a winding wire exit hole 203. In this embodiment of this application, after a three-phase winding of the motor 400 penetrates out through the winding wire exit hole 203, the three-phase winding is electrically connected to a three-phase copper bar of the motor controller 500 through the winding wire entry hole 202, to receive a three-phase alternating current transmitted by the motor controller 500. In an embodiment, along the gravity direction, the winding wire entry hole 202 is higher than the winding wire exit hole 203, and the winding wire exit hole 203 is higher than the housing oil inlet hole 2212.

In an embodiment, the winding wire exit hole 203 is configured to communicate with the reducer accommodation cavity 211 and the motor accommodation cavity 212 along the axial direction O of the dual-motor powertrain 10. Along the axial direction O of the dual-motor powertrain 10, the motor accommodation cavity 212, the winding wire exit hole 203, and the reducer accommodation cavity 211 are sequentially arranged, the winding wire exit hole 203 penetrates through a housing part shared by the reducer accommodation cavity 211 and the motor accommodation cavity 212, and a projection of the winding wire entry hole 202 is located in a projection of the reducer accommodation cavity 211.

In an embodiment, the winding wire entry hole 202 penetrates through the intermediate housing 200 along the radial direction R of the dual-motor powertrain 10. The winding wire entry hole 202 in each intermediate housing 200, the housing mounting surface 220, and one partition plate mounting surface 110 of the middle partition plate 100 are sequentially arranged along the axial direction O of the dual-motor powertrain 10. Along the axial direction O of the dual-motor powertrain 10, winding wire entry holes 202 in the two intermediate housings 200 are arranged in parallel on the two sides of the middle partition plate 100.

In an embodiment, along the axial direction O of the dual-motor powertrain 10, the motor accommodation cavity 212 of the intermediate housing 200 includes an opening facing away from the middle partition plate 100. The dual-motor powertrain 10 further includes two motor end covers (not shown in the figure), and each motor end cover is configured to enclose an opening of a motor accommodation cavity 212 in one intermediate housing 200. In this embodiment of this application, the winding wire entry hole 202 is closer to the middle partition plate 100, and a three-phase winding wire entry terminal of the motor 400 is closer to the reducer accommodation cavity 211. In an embodiment, along the axial direction O of the dual-motor powertrain 10, a distance between the winding wire entry hole 202 and the middle partition plate 100 is less than a distance between the winding wire entry hole 202 and the motor end cover.

The foregoing describes in detail the dual-motor powertrain and the electric vehicle provided in embodiments of this application. The principles and embodiments in this application are described in this specification by using specific examples. The descriptions about embodiments are merely provided to help understand the method in this application and core ideas of the method. In addition, a person of ordinary skill in the art may make modifications to the specific embodiments and the application scope based on the idea of this application. In conclusion, the content of this specification shall not be construed as a limitation on this application.

## Claims

1. A dual-motor powertrain with an integrated housing, wherein the dual-motor powertrain comprises:
two intermediate housings, wherein an accommodation cavity of each intermediate housing is configured to accommodate one reducer and one motor; and
a middle partition plate, wherein the middle partition plate comprises two partition plate mounting surfaces, the two partition plate mounting surfaces face away from each other along an axial direction of the dual-motor powertrain, and each partition plate mounting surface is configured to be fastened to one intermediate housing, wherein
each partition plate mounting surface comprises two partition plate oil holes, and directions of two partition plate oil holes on one partition plate mounting surface face away from directions of two partition plate oil holes on the other partition plate mounting surface along the axial direction of the dual-motor powertrain; and
the two partition plate oil holes on each partition plate mounting surface communicate through one internal oil passage of the middle partition plate, and the two partition plate oil holes on each partition plate mounting surface respectively communicate with one heat exchanger and an accommodation cavity through two internal oil passages of one intermediate housing.

2. The dual-motor powertrain according to claim 1, wherein an outer circumferential surface of the middle partition plate comprises two first holes, the two first holes are spaced apart along the axial direction of the dual-motor powertrain, each first hole communicates with two partition plate oil holes on one partition plate mounting surface through the internal oil passage of the middle partition plate, and each first hole is configured to accommodate one blocking member.

3. The dual-motor powertrain according to claim 2, wherein a spacing between each first hole and one partition plate oil hole communicating with the first hole is less than a spacing between each first hole and the other partition plate oil hole communicating with the first hole.

4. The dual-motor powertrain according to claim 3, wherein the outer circumferential surface of the middle partition plate comprises two second holes, the two second holes are spaced apart along the axial direction of the dual-motor powertrain, each second hole communicates with the other partition plate oil hole on one partition plate mounting surface through another internal oil passage of the middle partition plate, and each second hole is configured to accommodate one blocking member.

5. The dual-motor powertrain according to claim 4, wherein a spacing between the second hole and the first hole is greater than a spacing between the two partition plate oil holes on each partition plate mounting surface.

6. The dual-motor powertrain according to claim 4, wherein a spacing between each second hole and the other partition plate oil hole communicating with the second hole is less than a spacing between the one partition plate oil hole and the other partition plate oil hole communicating with the second hole.

7. The dual-motor powertrain according to claim 4, wherein the middle partition plate further comprises two rotating shaft oil holes, the two rotating shaft oil holes are respectively arranged on same sides as the two partition plate mounting surfaces along the axial direction of the dual-motor powertrain, and each second hole further communicates, through the another internal oil passage of the middle partition plate, with one rotating shaft oil hole distributed on a same side as the other partition plate oil hole; and
along a radial direction of the dual-motor powertrain, each rotating shaft oil hole is located on an inner side of the other partition plate oil hole distributed on a same side as the rotating shaft oil hole, and each second hole is located on an outer side of the other partition plate oil hole.

8. The dual-motor powertrain according to any one of claims 3 to 7, wherein the outer circumferential surface of the middle partition plate comprises at least one ventilation valve fastening hole, and each ventilation valve fastening hole is configured to accommodate and fasten one ventilation valve; and
a spacing between each ventilation valve fastening hole and the other partition plate oil hole on each partition plate mounting surface is less than a spacing between each ventilation valve fastening hole and the one partition plate oil hole on each partition plate mounting surface.

9. The dual-motor powertrain according to claim 8, wherein the middle partition plate further comprises a communication hole, and the communication hole is configured to communicate with two sides of the middle partition plate and the ventilation valve fastening hole;
a spacing between the communication hole and the other partition plate oil hole on each partition plate mounting surface is less than a spacing between the communication hole and the one partition plate oil hole on each partition plate mounting surface; and
a spacing between the communication hole and the ventilation valve fastening hole is less than a spacing between the communication hole and the other partition plate oil hole on each partition plate mounting surface.

10. The dual-motor powertrain according to any one of claims 1 to 9, wherein each partition plate mounting surface further comprises a plurality of partition plate fastening holes, the partition plate fastening hole is configured to be fastened to one intermediate housing, an opening of each partition plate fastening hole faces the one intermediate housing, the plurality of partition plate fastening holes are sequentially spaced apart on an edge of the middle partition plate, and the two partition plate oil holes are arranged on an inner side of the plurality of partition plate fastening holes along the radial direction of the dual-motor powertrain.

11. The dual-motor powertrain according to any one of claims 1 to 9, wherein each intermediate housing comprises a housing mounting surface, the housing mounting surface of each intermediate housing is configured to be fastened to one partition plate mounting surface of the middle partition plate, each housing mounting surface comprises two housing oil holes, and the two housing oil holes respectively communicate with a heat exchanger and the accommodation cavity through two internal oil passages of the same intermediate housing; and
the two housing oil holes on each housing mounting surface respectively communicate with two partition plate oil holes on the one partition plate mounting surface fastened to the housing mounting surface, and each housing oil hole and one partition plate oil hole communicating with each housing oil hole are arranged along the axial direction of the dual-motor powertrain.

12. The dual-motor powertrain according to claim 11, wherein each intermediate housing further comprises a heat exchanger mounting surface, the heat exchanger mounting surface is configured to fasten the heat exchanger, the heat exchanger mounting surface comprises a heat exchanger oil inlet hole, and the heat exchanger oil inlet hole on each intermediate housing is configured to: communicate with an oil outlet of the heat exchanger, and communicate with one housing oil hole through one internal oil passage of the same intermediate housing; and
an opening direction of the heat exchanger oil inlet hole on each intermediate housing intersects with the axial direction of the dual-motor powertrain.

13. The dual-motor powertrain according to claim 12, wherein the heat exchanger mounting surface of each intermediate housing further comprises a heat exchanger oil outlet hole, the accommodation cavity of each intermediate housing comprises a reducer accommodation cavity and a motor accommodation cavity, an inner wall of each reducer accommodation cavity comprises an oil suction hole, each reducer accommodation cavity communicates with the heat exchanger oil outlet hole on the same intermediate housing through the oil suction hole on the inner wall of the reducer accommodation cavity, and each motor accommodation cavity communicates with the other housing oil hole through the other internal oil passage of the same intermediate housing;
the motor accommodation cavity, the reducer accommodation cavity, and the housing mounting surface of each intermediate housing are sequentially arranged along the axial direction of the dual-motor powertrain; and
along the axial direction of the dual-motor powertrain, the heat exchanger oil outlet hole, the heat exchanger oil inlet hole, and the housing mounting surface of each intermediate housing are sequentially spaced apart, and the heat exchanger oil outlet hole, the oil suction hole, and the housing mounting surface of each intermediate housing are sequentially spaced apart.

14. The dual-motor powertrain according to claim 13, wherein each intermediate housing comprises an oil pump accommodation groove, the oil pump accommodation groove is configured to accommodate an oil pump, and the oil pump accommodation groove of each intermediate housing is configured to communicate with the heat exchanger oil outlet hole and the oil suction hole on the same intermediate housing; and
along the axial direction of the dual-motor powertrain, a groove opening direction of the oil pump accommodation groove of each intermediate housing faces away from the oil suction hole communicating with the oil pump accommodation groove.

15. An electric vehicle, comprising a vehicle body, a battery pack, and the dual-motor powertrain according to any one of claims 1 to 14, wherein the battery pack and the dual-motor powertrain are fastened to the vehicle body, the dual-motor powertrain comprises two motors and two reducers, a motor accommodation cavity and a reducer accommodation cavity of each intermediate housing are respectively configured to accommodate one motor and one reducer, the motor is configured to: receive electric energy provided by the battery pack, and drive a wheel of the electric vehicle through the reducer, and an oil suction hole of the dual-motor powertrain is lower than a ventilation valve of the dual-motor powertrain along a gravity direction.
